# EUROPÄISCHE PATENTSCHRIFT

(11) **EP 2 885 231 B1**
(45) Veröffentlichungstag und Bekanntmachung des Hinweises auf die Patenterteilung: **13.11.2019**
(21) Anmeldenummer: 13765675.7
(22) Anmeldetag: 13.09.2013
(51) Int. Cl.: B65G 47/38, B65G 47/61

(54) **TASCHE FÜR HÄNGEFÖRDERER UND TASCHEN-HÄNGEFÖRDERANLAGE**
POCKET FOR OVERHEAD CONVEYOR AND OVERHEAD POCKET CONVEYOR SYSTEM
POCHE POUR CONVOYEUR AÉRIEN ET INSTALLATION DE TRANSPORT AÉRIENNE À POCHES

(30) Priorität: 18.09.2012 DE 102012018925
(43) Veröffentlichungstag der Anmeldung: 24.06.2015
(73) Patentinhaber: SSI Schäfer Automation GmbH, 8051 Graz-Gösting (AT)
(72) Erfinder: BUCHMANN, Rainer, A-8046 Graz (AT)
(74) Vertreter: Witte, Weller & Partner Patentanwälte mbB
(86) Internationale Anmeldenummer: PCT/EP2013/068966
(87) Internationale Veröffentlichungsnummer: WO 2014/044601

(56) Entgegenhaltungen:
- DE-A1-102008 026 720
- JP-A- H07 304 514
- US-A- 2 755 013
- US-A1- 2005 230 336
- US-S- D 599 147

## Beschreibung

Die vorliegende Erfindung betrifft eine Taschen-Hängeförderanlage mit einem Hängeförderer zum Transportieren von Taschen entlang einer Führungsschiene stromabwärts in einer Förderrichtung, wobei die Taschen in einer Transportstellung lotrecht unterhalb der Führungsschiene hängen und wobei die Taschen in einer Beladestellung im Wesentlichen horizontal ausgerichtet sind. Insbesondere sind die Taschen sowohl in der Transport- als auch in der Beladestellung parallel zu einer Querrichtung orientiert, d.h. vorzugsweise senkrecht zur Förderrichtung.

Die Erfindung betrifft ferner eine Tasche zum Einsatz in einer derartigen Taschen-Hängeförderanlage. Außerdem betrifft die Erfindung eine Beladestation zum Einsatz in einer derartigen Taschen-Hängeförderanlage sowie eine Entladestation.

Schließlich betrifft die vorliegende Erfindung ein Verfahren zum, vorzugsweise automatisierten, Beladen der Tasche.

In der deutschen Patentanmeldung DE 10 2008 061 685 A1 werden (Transport-)Taschen beschrieben, um sogenannte (Liege-)Ware, wie beispielsweise Schuhe, verpackte Bekleidung oder anderes Stückgut, in Hängeförderanlagen transportieren zu können. Die Taschen weisen üblicherweise einen Tragehaken auf, der in Adapterelemente der Hängeförderanlage gleichermaßen wie Bügel eingehängt werden kann, auf denen Kleidungsstücke hängen. Derartige Hängeförderanlagen sind wiederum aus der europäischen Patentanmeldung EP 1 690 811 A1 bekannt. In derartigen Hängeförderanlagen werden Adapter entlang von Führungsschienen mittels angetriebener Zugmittel (Ketten) transportiert, wobei die Adapter in einem untern Abschnitt Halteösen aufweisen, in die wiederum die Bügel eingehängt werden können.

Ferner werden in der DE 10 2008 061 685 A1 einleitend Taschen beschrieben, die aus einem flexiblen Material, beispielsweise aus einem Gewebe in Form einer Bahn, hergestellt werden, wobei in einem oberen Bereich der Tasche ein rechteckiger Bügel in Form eines Rahmens vorgesehen ist, der die beiden Enden der Gewebebahn aufnimmt. Diese Taschen sind seitlich offen. In die seitlichen Öffnungen können Gegenstände, wie z.B. Liegewaren, eingelegt werden. Das Einführen ist aber nicht liegend, sondern nur aufgerichtet möglich. In der DE 10 2008 061 685 A1 selbst wird beschrieben, wie derartige Taschen nicht seitlich, sondern frontal von oben durch den rahmenartigen Bügel beladen werden können.

Zu diesem Zweck wird in der DE 10 2008 061 685 eine Beladestation beschrieben, die eine obere Zuführschiene, einen Senkrechtförderer, und eine untere Abführschiene aufweist. Die Zuführschiene ist höher als die Abführschiene angeordnet. Der Senkrechtförderer verbindet ein stromabwärts gelegenes Ende der Zuführschiene mit einem stromaufwärts gelegenen Ende der Abführschiene in einer im Wesentlichen vertikalen Richtung. An einem stromabwärts gelegenen Ende des Senkrechtförderers sind mehrere getrennt angeordnete, seitliche Führungsbleche in unterschiedlichen Höhen vorgesehen, um den rahmenartigen Bügel der vorbekannten Tasche in eine geöffnete Position zu bringen, die es erlaubt, die Tasche frontal mittels eines Stetigförderers (z.B. mittels eines Gurtförderers) zu beladen. Die Liegeware wird liegend über den Gurtförderer in die Tasche bewegt und fällt aber innerhalb der Tasche bis auf den Taschenboden herunter. Um den rahmenartigen Bügel in seine Öffnungsstellung zu bewegen, sind am rahmenartigen Bügel seitlich überstehende Vorsprünge vorgesehen, die über die Breite des tatsächliche Speichervolumens der Tasche seitlich vorstehen. Diese Vorsprünge wechselwirken mit einem ersten Führungsblechpaar.

Am unteren Ende der Taschen ist ein Öffnungsmechanismus vorgesehen, um eine Vorderwand der Tasche von einer Rückwand der Tasche zu trennen, so dass sich eine nach unten weisende Öffnung ergibt, aus der die Ware herausfallen kann. Der Öffnungsmechanismus ist in der deutschen Patentanmeldung DE 10 2008 026 720 A beschrieben und weist seitlich überstehende Kupplungselemente auf, die wiederum mit einem unteren, zweiten Führungsblechpaar wechselwirken. Die Führungsbleche des unteren Paars sind geometrisch komplex geformt, um das untere Ende der Tasche bzw. die Kupplungselemente innerhalb der Beladestation am unteren Ende des Senkrechtförderers so zu lenken, dass die Tasche in ihrer Beladestellung leicht schräg gegenüber der Vertikalen orientiert ist, so dass sich der rahmenartige Bügel allein durch seine Gewichtskraft für eine anschließende Beladung mit Liegewaren öffnet. Die DE 10 2008 026 720 A1 zeigt eine Taschen-Hängeförderanlage nach dem Oberbegriff des Anspruchs 1 und eine Tasche nach dem Oberbegriff des Anspruchs 14.

Der mechanische Aufbau der Beladestation der DE 10 2008 061 685 A1 ist komplex. Viele verschiedene Führungsbleche sind erforderlich. Die Förderstrecke ist nicht kontinuierlich ausgebildet, sondern durchläuft im Bereich der Beladestation eine vertikale Stufe. Ein kontinuierlicher Transport der Taschen durch die Beladestation hindurch ist nicht möglich. Am stromabwärts gelegenen Ende der Zuführschiene muss eine Stoppeinrichtung vorgesehen werden, um den Zufluss von Taschen zum Senkrechtförderer zu regulieren. Am stromabwärts gelegenen, unteren Ende des Senkrechtförderers ist eine weitere Stoppeinrichtung erforderlich, um eine zu beladende Tasche in ihrer Beladestellung zu halten. Die Taschen werden diskontinuierlich durch die Beladestation bewegt. Die Leistung (Anzahl der tatsächlich beladenen Taschen pro Zeiteinheit) ist verhältnismäßig gering.

Eine schonende Beladung der Taschen mit Liegeware in einem liegenden Zustand ist nicht möglich, weil die Liegeware am Ende des frontalen Zuführförderers in die Tasche fällt. Die Liegeware wird beim Zuführen aus einer horizontalen Ausrichtung in eine schräge, vertikale Ausrichtung gekippt. Die Liegeware legt eine gewisse Fallhöhe innerhalb der Tasche zurück, bis sie auf den Boden der Tasche aufprallt.

Auch ein Entladevorgang gestaltet sich mit der Tasche gemäß der DE 10 2008 026 720 A schwierig. Da sich beim Trennen der Vorderwand von der Rückwand ein nach unten öffnendes Maul ergibt, legt die Liegeware beim Entladen wiederum eine gewisse Fallhöhe bzw. -strecke zurück und prallt anschließend auf. Die Vorder- und Rückwände von geöffneten Taschen müssen später in einer separaten Station wieder miteinander verbunden werden, um die Taschen zu schließen. All diese Aktionen sind material-, steuerungs- und zeitaufwändig. Aufgrund der Vielzahl von Führungsblechen kann es dazu kommen, dass sich Taschen innerhalb der Beladestation verklemmen und so zu einem Stau führen.

Es ist daher eine Aufgabe der vorliegenden Erfindung, eine neue Transporttasche, eine Taschen-Hängeförderanlage sowie ein Verfahren zum Beladen derartiger Taschen vorzusehen, wobei die Taschen seitlich be- und entladbar ist. Insbesondere sollte ein Hängeförderer im Bereich der Beladestation keine vertikale Stufe in seiner Streckenführung aufweisen, um die Leistung hoch zu halten. Weiter ist es wünschenswert, die Waren ausschließlich liegend bzw. ohne Fallhöhen zu handhaben. Die Beladestation sollte vorzugsweise mechanisch einfach aufgebaut sein.

Diese Aufgabe wird durch eine Taschen-Hängeförderanlage gemäß Anspruch 1 gelöst.

Die Tasche-Hängeförderanlage der Erfindung zeichnet sich insbesondere durch eine einfach aufgebaute, universell einsetzbare Tasche aus, die sowohl seitlich, insbesondere horizontal seitlich, als auch frontal beladen und entladen werden kann. Die Seiten der Taschen werden beim Be- und Entladen nicht voneinander getrennt. Die Tasche legt sich schlaufenförmig um die zu ladende Ware und fixiert die geladene Ware allein durch Schwerkraft. Der Belade- und Entladevorgang erfolgt vorzugsweise allein durch Schwerkraft, ohne dass die Ware fällt.

Die Beladestation weist vorzugsweise ein einziges Paar von Führungselementen auf, die nahezu parallel zu der Führungsschiene in einem einzigen Höhenbereich verlaufen. Mehrere separate Führungsschienen auf unterschiedlichen Höhenniveaus sind nicht erforderlich. Die Tasche wird durch eine fortgesetzte Transportbewegung in der Förderrichtung aus der lotrechten Transportstellung in die horizontale Beladestellung gedreht. Die Förderstrecke (Führungsschiene des Hängeförderers) muss zu diesem Zweck keine Höhendifferenz überwinden. Dies bedeutet, dass die Streckenführung kontinuierlich ohne Integration einer künstlichen Höhendifferenz stattfinden kann. Stoppeinrichtungen im Bereich der Beladestation sind nicht erforderlich.

Liege-Ware kann schonend beladen und entladen werden. Die Liege-Ware kann liegend geladen werden. Der Beladevorgang kann manuell oder automatisiert erfolgen.

Be- und Entladevorgänge können durchgeführt werden, während die Transportbewegung kontinuierlich fortgesetzt wird.

Weil die Rückseite der Tasche breiter als die Vorderseite, breiter als der Deckel und breiter als der Boden ausgebildet ist, können die Vorderseite, der Deckel und der Boden von der Rückseite zwischen seitlich angeordneten Komponenten der Auslenkeinrichtungen der Beladestationen oder der Entladestationen, die im Wesentlichen horizontal orientiert sind, herabhängen, um die Tasche zu öffnen. Die Öffnung der Tasche erfolgt selbsttätig durch Schwerkraft.

Bei einer besonderen Ausgestaltung der Anlage erstreckt sich jeder Flügelbereich der Tasche in der Längsrichtung über eine gesamte Länge der Rückseite.

Die Tasche "rollt" über den Flügelbereich aus der lotrechten Transportstellung in die horizontale Beladestellung ab, indem die Tasche durch die fortgesetzte Transportbewegung des Hängeförderers auf die Auslenkrichtung gezogen wird. Da sich jeder Flügelbereich vorzugsweise über die gesamte Länge der Rückseite erstreckt, kann die Auslenkeinrichtung in Bezug auf eine Höhenausrichtung größere Toleranzen aufweisen, ohne dass man Gefahr läuft, dass die Taschen nicht in die Beladestellung gedreht werden.

Ferner können unterschiedlich lange Taschen problemlos eingesetzt werden, so dass die Anlage unabhängig vom eingesetzten Taschentyp ohne Umrüstung einsetzbar ist. Kurze und lange Taschen können gleichermaßen mit identisch, d.h. unverändert, ausgebildeten Beladestationen und/oder Entladestationen betrieben werden.

Insbesondere sind die Rückseite, der Deckel, die Vorderseite und der Boden der Tasche dauerhaft miteinander verbunden. Diese Maßnahme gewährleistet, dass innerhalb der Hängeförderanlage keine Station vorgesehen werden muss, wo die entkoppelten Vorderseiten wieder mit den Rückseiten zwecks einer erneuten Beladung der Taschen verbunden werden.

Auch ist es von Vorteil, wenn die Aufhängeeinrichtung ausschließlich um eine horizontale Achse schwenkbar mit der Rückseite verbunden ist. Eine Ausrichtung der Taschen relativ zur Förderrichtung bleibt sowohl während eines Transports als auch während Beladevorgängen und Entladevorgängen unverändert. Die Taschen können also während einer kontinuierlichen Transportbewegung beladen und entladen werden. Dies steigert die Leistung der Gesamtanlage.

Bei einer weiteren speziellen Ausgestaltung der Tasche ist die Rückseite um eine horizontale Schwenkachse schwenkbar mit dem Deckel verbunden, die im oberen Abschnitt der Rückseite angeordnet ist. Ferner ist die Rückseite schwenkbar um eine zweite horizontale Schwenkachse mit dem Boden verbunden. Außerdem sind der Deckel und der Boden jeweils mit der Vorderseite verbunden.

Die horizontalen Schwenkachsen ermöglichen ein Aufklappen und Zuklappen der Tasche allein durch Schwerkraft. In der unbeladenen Transportstellung nehmen die Taschen entlang der Förderrichtung einen minimalen Raum ein, so dass leere Taschen mit hoher Dichte transportiert werden können. Die Vorderseite liegt im unbeladenen Transportzustand auf der Rückseite auf.

Insbesondere ist ausschließlich die Rückseite der Tasche eingerichtet, in Kontakt mit der Auslenkeinrichtung zu kommen.

Weder der Deckel noch sonstige andere Anbauten an der Tasche sind erforderlich, um die Tasche aus der lotrechten Transportstellung in die horizontale Beladestellung - allein durch die fortgesetzte Transportbewegung des Hängeförderers - zu bringen.

Insbesondere weist die Rückseite der Tasche einen Rahmen auf, der eine rechtwinklige Grundfläche umgibt und der aus Längsstreben und Querstreben gebildet ist.

Der Rahmen der Rückseite dient der Versteifung, da die Rückseite das wesentliche Tragen der Elemente in der Beladestellung darstellt. Sowohl der Deckel, als auch die Vorderseite, der Boden und ggf. die geladene Ware hängen an der Rückseite. Um ein Durchbiegen, welches durch die an der Rückseite hängenden Elemente hervorgerufen werden kann, zu verhindern, empfiehlt es sich, die Rückseite entsprechend verwindungssteif bzw. formstabil auszugestalten. Der Rahmen der Rückseite ist vorzugsweise in einem außenumfänglichen Randbereich der Rückseite angeordnet. Der Rahmen verhindert auch, dass die Tasche seitlich aus der Auslenkeinrichtung rutschen kann.

Vorzugsweise weist der Deckel alternativ oder ergänzend einen Rahmen auf, der wiederum eine rechtwinklige Grundfläche umgibt und der wiederum aus Längsstreben und einer oder mehreren Querstreben gebildet ist. Das oben für den Rahmen der Rückseite Gesagte gilt hier entsprechend. Der Rahmen versteift den Deckel. Der Rahmen des Deckels kann schwenkbar um den separaten Rahmen der Rückseite gelagert sein.

Ferner ist es bevorzugt, wenn der Boden ergänzend oder alternativ einen Rahmen aufweist, der wiederum eine rechtwinklige Grundfläche umgibt und der aus Längsstreben und Querstreben gebildet ist.

Auch die Vorderseite kann mit einem entsprechenden (separaten) Rahmen versehen sein.

Das oben für die Rahmen der Rückseite und des Deckel Gesagte gilt für den Rahmen des Bodens bzw. den Rahmen der Vorderseite entsprechend.

Wenn sowohl die Rückseite als auch der Deckel, die Vorderseite und der Boden mit einem (separaten) Rahmen versehen sind, die alle schwenkbar miteinander um koaxial angeordnete Querstreben verbunden sind, bilden diese Rahmen in einer Seitenansicht ein Parallelogramm, welches in der horizontalen Beladestellung selbsttätig durch Schwerkraft aufklappt und welches in der lotrechten Transportstellung selbsttätig durch Schwerkraft zusammenklappt.

Ferner ist es von Vorteil, wenn die Tasche zusätzlich mindestens eine seitliche Öffnung aufweist, wobei jede seitliche Öffnung von der Rückseite, vom Deckel, von der Vorderseite und vom Boden umgeben ist.

Über die seitliche Öffnung kann die Taschenseite seitlich horizontal be- und entladen werden.

In einer weiteren bevorzugten Ausgestaltung weist die Auslenkeinrichtung ein erstes Schwenkelement, das relativ zur Führungsschiene in der Querrichtung versetzt angeordnet ist, und ein zweites Schwenkelement auf, das relativ zur Führungsschiene in der Querrichtung gegenüberliegend zum ersten Schwenkelement versetzt angeordnet ist, so dass die Vorderseite zwischen den Schwenkelementen schwenkbar durchhängen kann.

Üblicherweise ist die Tasche spiegelsymmetrisch zu einer Ebene ausgebildet, die durch die Förderrichtung und die Vertikale gebildet wird und durch die Führungsschiene verläuft. Bei dieser Ausgestaltung hat es sich von Vorteil erwiesen, wenn auf beiden Seiten der Tasche Flügelbereiche vorgesehen sind. Um beide Flügelbereich gleichmäßig in der Beladestation zu führen, sind auf beiden Seiten Schwenkelemente vorgesehen, um mit dem jeweiligen Flügelbereich in Eingriff zu kommen. Die Schwenkelemente leiten die Drehbewegung aus der lotrechten Transportstellung in die horizontale Beladestellung ein, sobald die Flügelbereiche an die Schwenkelemente anstoßen.

Vorzugsweise sind zwei Schwenkelemente vorgesehen, die in der Querrichtung seitlich zur Führungsschiene so gegeneinander versetzt sind, dass der Deckel, die Vorderseite und der Boden zwischen den Schwenkelementen von der Rückseite herabhängen können.

Ein Abstand der Schwenkelemente in der Querrichtung ist also mindestens so groß wie die größte Breite des Deckels, der Vorderseite oder des Bodens. Dann können der Deckel, die Vorderseite und der Boden selbsttätig durch Schwerkraft aufklappen, während die Rückseite durch die Auslenkeinrichtung in der horizontalen Beladestellung gehalten wird.

Weiter ist es von Vorteil, wenn die Auslenkeinrichtung zwei Umlenkschienen aufweist, die in einer Draufsicht im Wesentlichen parallel zur Förderrichtung verlaufen.

Wenn links und rechts relativ zur Führungsschiene jeweils eine Umlenkschiene vorgesehen ist, wird die Tasche bzw. werden die Flügelbereiche auf beiden Seiten gestützt. Selbst bei einer ungleichmäßigen Gewichtsverteilung der Ware(n) innerhalb der Tasche, wird die Tasche sicher in der horizontalen Beladestellung gehalten. Die parallele Ausrichtung der Umlenkschienen stellt sicher, dass beide Seiten der Tasche in der Beladestation jederzeit gestützt werden.

Gemäß einer vorteilhaften Ausgestaltung weist jede der Umlenkschienen einen einleitenden Abschnitt, einen Beladeabschnitt und einen ausleitenden Abschnitt auf, wobei der Beladeabschnitt die Beladestellung der Taschen definiert und im Wesentlichen horizontal ausgerichtet ist und wobei der einleitende Abschnitt jeweils eines der Schwenkelemente umfasst.

Der einleitende Abschnitt kann stromabwärts ansteigend gegenüber der Horizontalen ausgebildet sein. Der ausleitende Abschnitt kann stromabwärts abfallend ausgebildet sein. Je kleiner der Anstiegs- und/oder Abstiegswinkel ist, desto "sanfter" werden die Taschen aus der lotrechten Transportstellung in die horizontale Beladestellung und umgekehrt gedreht. Diese sanfte Behandlung der Taschen hat eine sanfte Behandlung der zu transportierenden Ware zur Folge, so dass die Ware selbst schonend behandelt wird. Die Ware rutscht allenfalls langsam innerhalb der Tasche, fällt aber nicht.

Vorzugsweise ist jede der Umlenkschienen eine Kufe mit oder ohne eingebettete lose drehende Rollen.

Die Kufe stellt eine einfache Form zur Realisierung der Lenkeinrichtung bzw. der Umlenkschiene dar. Der Kontakt zwischen der Tasche und der Umlenkschiene erfolgt dann gleitend. Deshalb empfiehlt es sich, sowohl das Material (z.B. Teflon und PA) der Tasche als auch das Material der Kufe so zu wählen, dass der Haftreibungskoeffizient möglichst gering ist. Dies verlängert die Lebensdauer sowohl der Taschen als auch der Kufen. Ergänzend können an besonders strapazierten Stellen, wo große Kräfte herrschen, große drehende Rollen in der Umlenkschiene vorgesehen werden.

Insbesondere ist jede der Schwenkeinrichtungen eine lose drehende (Einzel-)Rolle.

Des Weiteren wird die oben genannte Aufgabe durch eine Tasche gemäß Anspruch 14 gelöst.

Die oben in Bezug auf die Anlage aufgeführten Vorteile gelten analog.

Ferner wird eine Beladestation zum Einsatz in einer Taschen-Hängeförderanlage offenbart, wobei die Beladestation eine Auslenkeinrichtung aufweist, wobei die Auslenkeinrichtung ein stromaufwärts gelegenes Ende und ein stromabwärts gelegenes Ende aufweist und unterhalb einer Führungsschiene eines Hängeförderers anordenbar ist, wobei das stromaufwärts gelegene Ende der Auslenkeinrichtung zumindest ein Schwenkelement aufweist, gegen welches Taschen während eines Transports in einer Förderrichtung anschlagen und um welches die Taschen zumindest anfänglich während eines fortgesetzten Transports in der Förderrichtung aus einer lotrechten Transportstellung in die im Wesentlichen horizontale Beladestellung drehen, wobei die Auslenkeinrichtung ausgebildet ist, während des Transports der Taschen durch die Beladestation hindurch permanent, vorzugsweise ausschließlich, mit einer jeweiligen Rückseite der Tasche in Kontakt zu sein und die jeweilige Rückseite aus der lotrechten Transportstellung in die im Wesentlichen horizontale Beladestellung zu führen.

Die oben im Zusammenhang mit der Anlage und der Tasche erwähnten Vorteile gelten analog.

Außerdem ist es bevorzugt, wenn die Beladestation ferner eine Zuführplattform aufweist, die in einer Höhe relativ zur Auslenkeinrichtung angeordnet ist, so dass die Ware 26 entlang einer Querrichtung seitlich in eine Tasche verschiebbar ist.

Hier kommt wieder die sanfte Behandlung der Ware zum Ausdruck. Die Ware durchfällt keine Höhenunterschiede. Die Ware wird nicht beschädigt. Die Ware wird lediglich geschoben. Ferner ist bei der Beladestation ein Schieber vorgesehen, der angeordnet ist, die Waren horizontal seitlich in die Tasche zu bewegen, wenn sich die Taschen in der Beladestellung befinden.

Auf diese Weise ist eine Automatisierung des Beladevorgangs möglich. Zusätzlich können End-Einrichtungen vorgesehen werden, um zu verifizieren, ob die richtige Ware in die aktuelle bereitgestellte Tasche bewegt wird. Dies erhöht die Kommissioniergenauigkeit bzw. verringert die Kommissionierfehler.

Vorzugsweise ist bei der Beladestation ferner ein Zuführförderer vorgesehen, der die Ware automatisiert in die Taschen befördert, wenn sich die Taschen in der Beladestellung befinden.

Auf diese Weise können mehrere Waren direkt hintereinander automatisiert in eine Tasche geladen werden. In einem Zuführförderer ist sowohl eine seitliche als auch eine frontale Beladung der Taschen möglich.

Weiter ist es von Vorteil, wenn der Zuführförderer unterhalb der Führungsschiene des Hängeförderers angeordnet ist, wobei der Zuführförderer unterhalb der Auslenkeinrichtung angeordnet ist und wobei der Zuführförderer zur frontalen Beladung der Taschen stromaufwärts relativ zur Beladestation angeordnet ist.

Ferner wird eine Entladestation zum Entladen von Taschen offenbart, die eine Hubeinrichtung und einen Abführförderer aufweist, wobei die Hubeinrichtung eingerichtet ist, in einer Entladestellung in Kontakt mit den Flügelbereichen zu kommen, so dass zumindest jeweils die unteren Abschnitte der Taschen horizontal ausgerichtet oder stromabwärts abfallend ausgerichtet sind.

Die Entladestation unterscheidet sich strukturell im Idealfall nicht von der Beladestation, so dass eine Beladestation als Entladestation eingesetzt werden kann und umgekehrt.

Bei einer besonderen Ausführungsform ist ferner ein Schieber vorgesehen, um die Waren seitlich in der Querrichtung aus den Taschen zu schieben.

Vorzugsweise ist der Abführförderer schwenkbar gelagert und parallel zur Förderrichtung orientiert.

Diese Maßnahme erleichtert ein frontales Entladen der Taschen durch Anheben des unteren Abschnitts der Rückseite relativ zur horizontalen Ausrichtung der Tasche.

Außerdem wird die oben genannte Aufgabe durch ein Verfahren gemäß Anspruch 15 gelöst.

Vorzugsweise wird die Transportbewegung während des Einführens nicht unterbrochen. Insbesondere erfolgt das horizontal seitliche oder das ansteigende frontale Einführen der Waren mittels eines entsprechend orientierten Zuführförderers oder eines Schiebers.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine perspektivische Ansicht einer Sequenz von Schritten (Fig. 1A bis 1E), die einen Beladevorgang einer Tasche mit Liegewaren gemäß der Erfindung in einer Beladestation gemäß der Erfindung in einer Hängeförderanlage gemäß der Erfindung zeigen;
- Fig. 2: eine schematisierte perspektivische Ansicht einer (Transport-)Tasche gemäß der Erfindung;
- Fig. 3: eine perspektivische Ansicht einer weiteren Tasche gemäß der Erfindung;
- Fig. 4: eine perspektivische Ansicht einer abgewandelten Tasche gemäß der Erfindung;
- Fig. 5: eine perspektivische Ansicht einer exemplarischen Tasche;
- Fig. 6: eine Seitenansicht einer alternativen Beladestation;
- Fig. 7: eine Seitenansicht einer weiteren alternativen Beladestation;
- Fig. 8: eine Seitenansicht einer Entladestation;
- Fig. 9: eine Draufsicht auf die Entladestation der Fig. 8;
- Fig. 10: eine Seitenansicht einer abgewandelten Entladestation;
- Fig. 11: eine Draufsicht auf eine weitere Entladestation;
- Fig. 12: eine Seitenansicht einer alternativen Beladestation;
- Fig. 13: eine Seitenansicht einer noch weiteren alternativen Beladestation;
- Fig. 14: eine Seitenansicht einer weiteren Entladestation; und
- Fig. 15: ein Flussdiagramm eines Verfahrens gemäß der Erfindung zum Beladen einer Tasche.

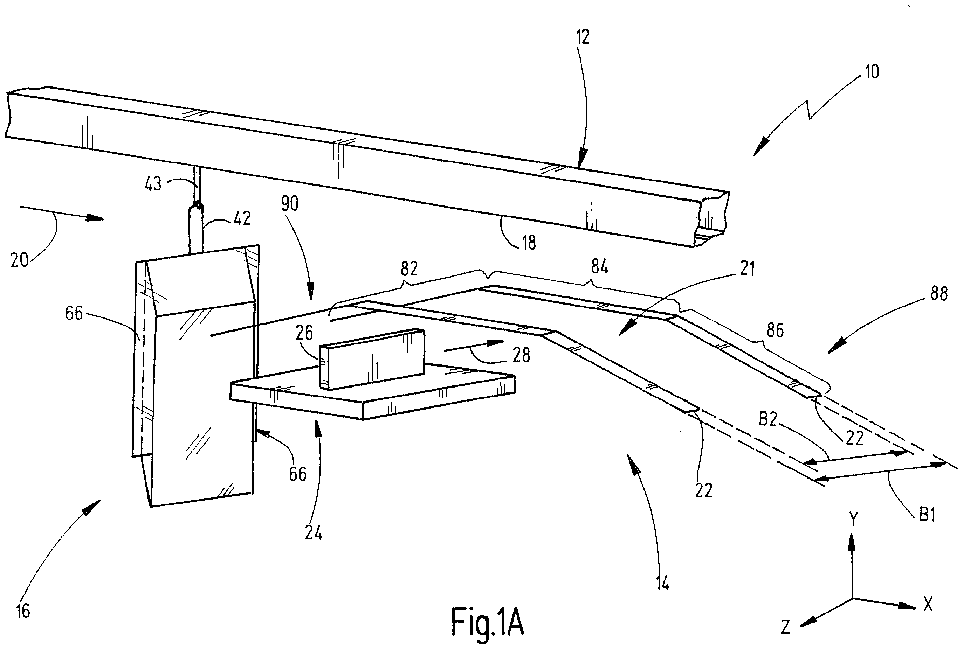

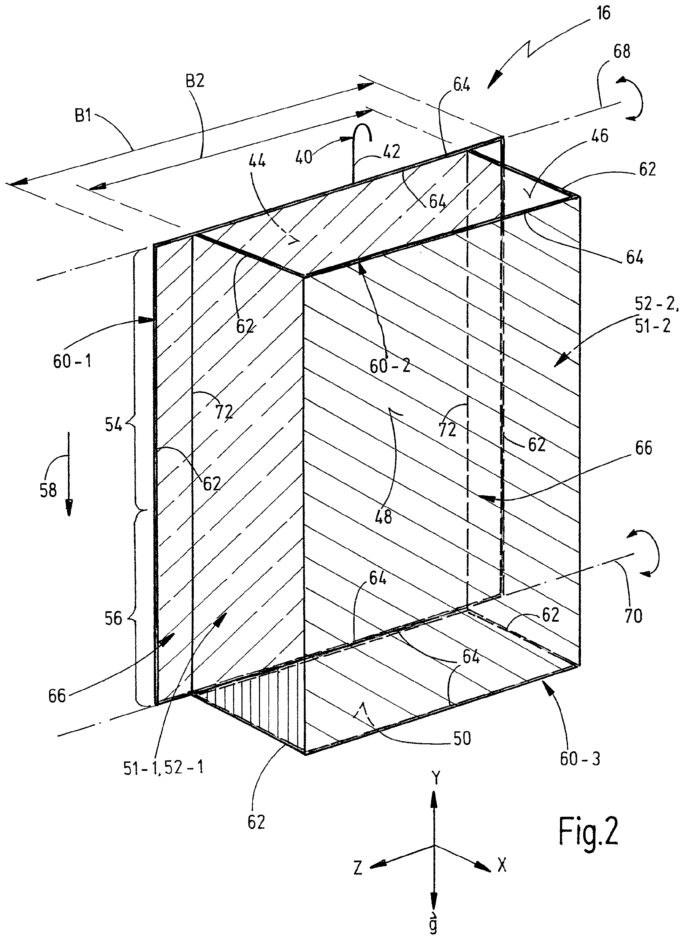

Nachfolgend wird unter Bezugnahme auf Fig. 1A ein allgemeiner Aufbau einer Taschen-Hängeförderanlage (nachfolgend auch kurz "Hängeförderanlage" genannt) 10 mit einem Hängeförderer 12, einer Beladestation 14 und einer (Transport-)Tasche 16 beschrieben. Unter Bezugnahme auf die Fig. 1A bis 1E wird später ein standbildartiger Ablauf eines Beladevorgangs beschrieben werden. Fig. 2 zeigt einen grundsätzlichen Aufbau einer Tasche 16 gemäß der Erfindung.

Fig. 1A zeigt eine perspektivische Ansicht der Fördertechnikanlage 10. Die Fördertechnikanlage 10 weist einen Hängeförderer 12 mit einer Führungsschiene 18 auf, entlang der ein nicht dargestelltes Zugmittel (z.B. eine Kette) bewegt und geführt wird, das wiederum mit einer Tasche 16 in Verbindung steht, um die Tasche 16 entlang der Führungsschiene 18 durch die Anlage 10 zu bewegen. Die Taschen 16 werden in einer Förderrichtung 20 entlang der Führungsschiene 10 bewegt. Die Förderrichtung 20 ist parallel zur Führungsschiene 18 orientiert und folgt dem Verlauf der Führungsschiene 18 in allen drei Raumrichtungen. In der Fig. 1A verläuft die Führungsschiene 18 parallel zu einer Längsrichtung X eines kartesischen Koordinatensystems XYZ, die gemeinsam mit einer Querrichtung Z eine horizontal orientierte Ebene definiert. Senkrecht auf der horizontalen Ebene XZ steht eine Höhenrichtung Y. Die Höhenrichtung Y definiert in diesem Fall eine lotrechte Ausrichtung.

Unterhalb der Führungsschiene 18 ist eine Beladestation 14 mit einer Auslenkeinrichtung 21 angeordnet. Die Auslenkeinrichtung 21 kann Umlenkschienen 22 aufweisen, die (in einer Draufsicht) symmetrisch zur Führungsschiene 18 angeordnet sind. In einer Seitenansicht sind die als Paar vorgesehenen Umlenkschienen 22 deckungsgleich angeordnet. Die Auslenkeinrichtung 21 lenkt die Taschen 16 aus ihrer lotrechten Transportstellung in eine im Wesentlichen horizontal ausgerichtete Beladestellung, während die Taschen 16 durch den Hängeförderer 12 in der Förderrichtung 20 bewegt werden. Die in der Fig. 1A gezeigte Tasche 16 befindet sich in einer lotrechten Transportstellung, d.h. die Tasche 16 ist im Wesentlichen parallel zur Höhenrichtung Y orientiert, die wiederum mit der Ausrichtung des Schwerkraftfelds der Erde übereinstimmt. Es versteht sich, dass Teile der Tasche 16 einen (kleinen) Winkel mit der Höhenrichtung Y bilden können. Auch derartige Ausrichtungen werden als von dem Begriff "lotrechten Transportstellung" umfasst angesehen. In der Fig. 1A ist die Tasche 16 in einem unbeladenen Zustand gezeigt.

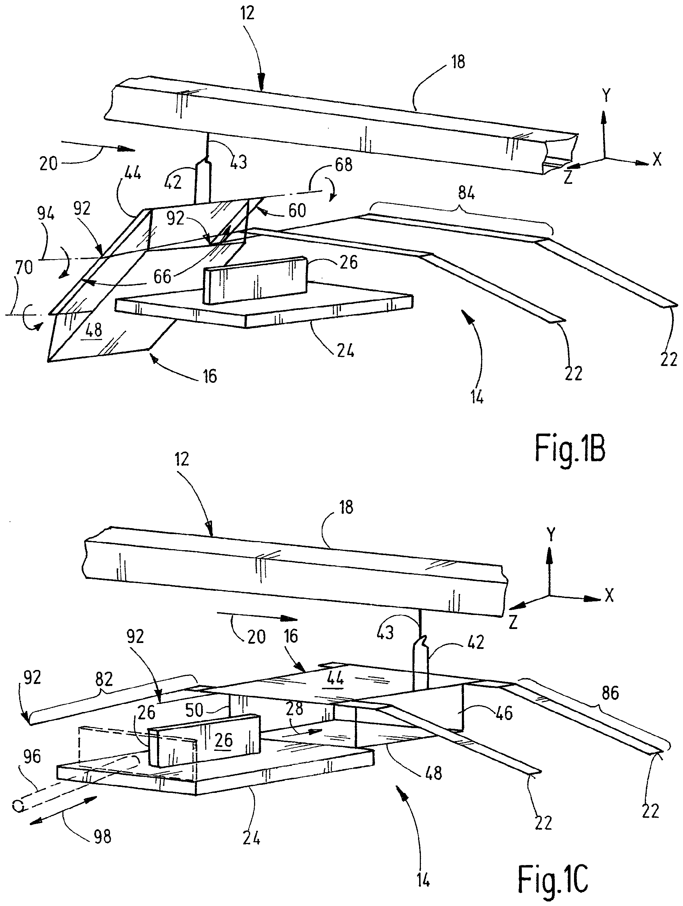

Seitlich zu einer oder beiden Umlenkschienen 22, d.h. in der Querrichtung Z versetzt, kann bzw. können eine oder mehrere Zuführplattformen 24 vorgesehen sein, die zur Zuführung von (Liege-)Ware 26 dient bzw. dienen. Die Liegeware 26 kann auf der Zuführplattform 24 liegend seitlich in die Tasche 16 eingeführt werden, wenn diese sich in ihrer im Wesentlichen horizontalen Beladestellung befindet, wie es unter Bezugnahme auf Fig. 1C noch näher erläutert werden wird.

Fig. 2 zeigt eine erste Ausführungsform einer Tasche 16 in einer perspektivischen Darstellung. Die Tasche 16 weist eine Aufhängeeinrichtung 40 zur (schwenkbaren) Verbindung mit dem Hängeförderer 12 auf. Die Aufhängeeinrichtung 40 ist exemplarisch in Form eines Hakens 42 realisiert. Die Aufhängeeinrichtung 40 ist zumindest um eine horizontale Achse schwenkbar an einem nicht näher bezeichneten Körper der Tasche 16 befestigt. Die Aufhängeeinrichtung 40 wechselwirkt mit einem Mitnehmer 43 des Hängeförderers 12, wie es in Fig. 1A gezeigt ist. Der Mitnehmer 43 kann ösenartig ausgebildet sein, um den Haken 42 aufzunehmen. Der Haken 42 kann z.B. in dem Mitnehmer 43 eingehängt werden.

Die Tasche 16 der Erfindung weist generell eine Rückseite 44, einen Deckel 46, eine Vorderseite 48 sowie einen Boden 50 auf. Die Rückseite 44, der Deckel 46, die Vorderseite 48 und der Boden 50 sind dauerhaft miteinander verbunden, d.h. die Vorderseite 48 wird zum Entladen der Tasche 16 nicht von der Rückseite 44 getrennt. Eine Beladung und Entladung erfolgt üblicherweise seitlich über Seitenwände 51 oder frontal über den Deckel 46, die zu diesem Zweck dann offen ausgebildet sind. Die Rückseite 44, die Vorderseite 48 und der Boden 50 sind geschlossen ausgebildet. Die Rückseite 44 ist formstabil ausgebildet, d.h. die Rückseite verformt sich unter Krafteinwirkung wenig bis gar nicht.

Die Rückseite 44, die Vorderseite 48 und der Boden 50 können z.B. aus einem (vorzugsweise dichten) flexiblen und strapazierfähigen Gewebe gebildet sein, so dass die Waren 26, die in die Tasche 16 gegeben wurden, in der Tasche 16 gehalten werden und nicht herausfallen. Die Rückseite 44, die Vorderseite 48 und der Boden 50 können aus jedem beliebigen Material gefertigt sein, welches ein Halten der Waren 26 innerhalb der Tasche 16 ermöglicht. Die Rückseite 44, die Vorderseite 48 und der Boden 50 können z.B. jeweils als separate Kunststoffplatten ausgebildet sein. Die Rückseite 44, die Vorderseite 48 und der Boden 50 können aber auch durch ein netzartiges Gewebe realisiert sein, wobei eine Maschengröße so gewählt ist, dass die Waren 26 nicht durch die Maschen fallen können. Auch wenn die Seiten 44, 48 und 50 der Tasche 16 in Form eines Netzes realisiert sind, sind sie im Sinne der vorliegenden Erfindung "im Wesentlichen geschlossen". Der Begriff "im Wesentlichen geschlossen" umfasst also alle Ausgestaltungen der Seiten 44, 46, 48, 50 und 51 des Körpers der Tasche 16, die ein unbeabsichtigtes Herausfallen der Waren 26 aus der Tasche 16 während eines Transports der Tasche 16 entlang des Hängeförderers 12 verhindern müssen.

Die Rückseite 44 und die Vorderseite 48 sind üblicherweise gleich lang. Der Deckel 46 und der Boden 50 sind üblicherweise gleich dimensioniert, d.h. gleich lang und gleich breit. Die Rückseite 44, der Deckel 46, die Vorderseite 48 und der Boden 50 umschließen üblicherweise ein quaderförmiges Volumen, wenn die Tasche 16 aufgeklappt ist. Die Rückseite 44 und die Vorderseite 48 sind in der Regel länger als der Deckel 46 und der Boden 50. Die Rückseite 44 ist aber immer jeweils breiter als die Vorderseite 48, der Deckel 46 und der Boden 50. In der horizontalen Beladestellung sind die Rückseite 44 und die Vorderseite 48 horizontal orientiert. Die Vorderseite 48 liegt beim stromaufwärts gerichteten Transport der Tasche 16 vorn. Die Aufhängeeinrichtung 40 ist, vorzugsweise zentral, an einer Oberkante der Rückseite 44 angebracht. Weil die Vorder- und Rückseiten 48 und 44 lang sind, kann die Tasche 16 automatisiert mit liegender Ware 26 beladen werden. Die Ware 26 muss nicht in eine aufrechte Stellung verbracht werden, um beladen zu werden, sondern kann in der "natürlichen" Liegestellung verbleiben.

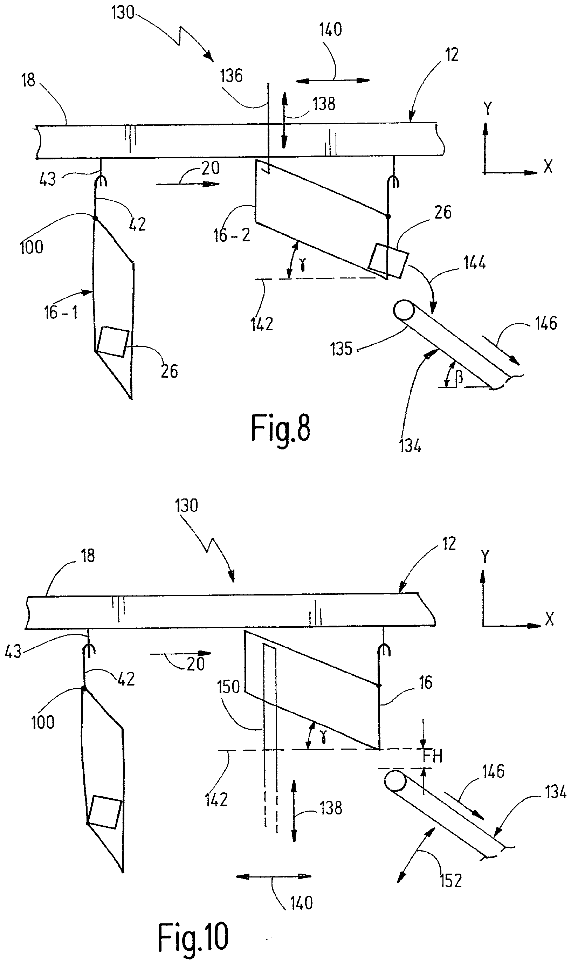

Üblicherweise sind die Seitenwände 51 und der Deckel 46 offen ausgebildet. Es versteht sich, dass eine einzige Öffnung, d.h. eine offen ausgebildete Seite, ausreicht, um die Tasche 16 zu beladen oder zu entladen. In der Fig. 2 definieren die offenen Seitenwände 51-1 (links) und 51-2 (rechts) seitliche Öffnungen 52-1 (links) und 52-2 (rechts) der Tasche 16. In der Fig. 2 ist die Tasche 16 in einer lotrechten, aufgeklappten unbeladenen Stellung gezeigt. Die in der Fig. 2 gezeigte aufgeklappte Stellung entspricht nicht der lotrechten Transportstellung, wie sie in Fig. 1A gezeigt ist, weil der Deckel 46, die Vorderseite 48 und der Boden 50 üblicherweise aufgrund der Schwerkraft nach unten hängen bzw. geklappt sind, da die Rückseite 44 über den Haken 42 in den Hängeförderer 12 eingehängt ist. Eine Beladung der Tasche 16 kann also seitlich von links, d.h. im Wesentlichen parallel zur Querrichtung Z, über die linke seitliche Öffnung 52-1, seitlich von rechts über die rechte seitliche Öffnung 52-2 oder frontal über den (offen ausgebildeten) Deckel 46 erfolgen, wie es nachfolgend unter Bezugnahme auf die Fig. 8 bis 10 noch näher erläutert werden wird.

Wie in Fig. 2 gezeigt, lässt sich die Rückseite 44 virtuell in einen oberen Abschnitt 54 und einen unteren Abschnitt 56 teilen, die in einer Längsrichtung 58 der Rückseite 44 aneinandergrenzen. Die Aufhängeeinrichtung 40 ist im oberen Abschnitt 54 angeordnet. Die Rückseite 44 ist im oberen Abschnitt 54 mit dem Deckel 46 verbunden. Die Rückseite 44 ist im unteren Abschnitt 56 mit dem Boden 50 verbunden. Der Deckel 46 und der Boden 50 sind über die Vorderseite 48 miteinander verbunden.

Wenn die Rückseite 44 nicht bereits durch das gewählte Material, aus welchem die Rückseite 44 gebildet wird, eine gewisse Steifigkeit und Formstabilität aufweist, die es erlaubt, dass die Rückseite 44 unter Beibehaltung ihrer im Wesentlichen planaren Form ausreichend steif ist, um in einer im Wesentlichen horizontal ausgerichtete Beladestellung, die insbesondere unter Bezugnahme auf die Fig. 1C noch näher beschrieben werden wird, sowohl den Deckel 46, die Vorderseite 48 und den Boden 50 als auch geladene Waren 26 trägt, kann zur Verstärkung der Rückseite 44 ein Rahmen 60 vorgesehen werden. Der Rahmen 60-1 der Rückseite 44 ist vorzugsweise entlang des äußeren Umfangs der Rückseite 48 angeordnet und weist Längsstreben 62 und Querstreben 64 auf, die miteinander verbunden sind, um die Rückseite 44 zu versteifen. Der Rahmen 60-1 der Rückseite 44 kann mit dem oben erwähnten Gewebe bespannt sein. In der Fig. 2 umgibt der Rahmen 60-1 eine im Wesentlichen rechteckige Fläche. In der Fig. 2 sind die Längsstreben 62 länger als die Querstreben 64 ausgebildet. Die Längsstreben 62 können aber auch kürzer als die Querstreben 64 ausgebildet sein. Die Streben 62 und 64 sind vorzugsweise aus Metall, Kunststoff oder Karbon gefertigt. Rahmen 60 sind in der Fig. 2 generell durch dunkle Linien angedeutet.

Der Deckel 46 kann ebenfalls einen (separaten) Rahmen 60-2 aufweisen, der Längsstreben 62 und Querstreben 64 aufweisen kann. In der Fig. 2 ist der Rahmen 62-2 außen entlang eines Umfangs des Deckels 46 angeordnet. Der Rahmen 62 ist z.B. rechteckig ausgebildet. Es versteht sich, dass die kürzeren Längsstreben 62 des Rahmens 60-2 auch länger als die Querstreben 64 des Rahmens 60-2 ausgebildet sein können. Die Längsstreben 62 und die Querstreben 64 des Rahmens 60-2 des Deckels 46 sind wiederum vorzugsweise starr miteinander verbunden. Der Rahmen 60-2 ist in Fig. 2 nicht bespannt, d.h. offen ausgebildet.

Der Boden 50 kann einen weiteren (separaten) Rahmen 60-3 aufweisen, der vorzugsweise identisch zum Rahmen 60-2 des Deckels 46 ausgebildet ist. Da der Boden 50 im Wesentlichen geschlossen ausgebildet ist, kann der Rahmen 60-3 ebenfalls mit einem Gewebe bespannt sein, vorzugsweise mit dem gleichen Gewebe wie die Rückseite 44.

Obwohl es in der Fig. 2 nicht gezeigt ist, kann die Vorderseite 48 ebenfalls einen weiteren (separaten) Rahmen aufweisen, der zwei Querstreben 64 aufweist, die den Querstreben 64 der Rahmen 60-2 und 60-3 entsprechen. Dieser Rahmen der Vorderseite 48 weist dann ferner zwei Längsstreben 62 auf, die den Längsstreben 62 des Rahmens 60-1 der Rückseite 44 entsprechen. Da die Vorderseite 48 ebenfalls geschlossen ausgebildet ist, könnte dieser Rahmen der Vorderseite 48 ebenfalls mit dem oben erwähnten Gewebe bespannt sein.

Es ist aber nicht zwingend erforderlich, einen separaten Rahmen für die Vorderseite 48 vorzusehen. Es reicht z.B. aus, eine Gewebebahn vorzusehen, die eine Länge aufweist, die nahezu einer Länge der Längsstreben 62 des Rahmens 60-1 der Rückseite 44 entspricht. Es versteht sich, dass die Länge der Vorderseite 48 auch etwas kürzer oder länger ausfallen kann, z.B. ± 20% der Länge der Rückseite 44. In diesem Fall wäre ein (Transport-)Volumen, welches durch die Tasche 16 definiert wird, kein Parallelepiped, sondern hätte eine davon abweichende Form.

Die oben separat vorgesehenen Rahmen 60 können auch als Einheit ausgebildet sein. In diesem Fall reduziert sich eine Anzahl der Querstreben 64, die benötigt wird, um vorzugsweise die Kanten des in der Fig. 2 gezeigten Parallelepipeds mit Streben zu versehen. Die Längsstreben 62 des Deckels 46 und des Bodens 50 sind dann gelenkig mit den Querstreben 64 der Rückseite 44 und der Vorderseite 48 verbunden.

Es versteht sich, dass keine der Seiten der Tasche, wobei der Deckel 46 und der Boden 50 in diesem Sinne ebenfalls als Seiten verstanden werden, zwingend einen Rahmen 60 benötigt.

Der Deckel 46 ist schwenkbar um eine erste Schwenkachse 68 mit der Rückseite 44 verbunden. Die erste Schwenkachse 68 ist horizontal orientiert und liegt in der Fig. 2 parallel zur Querrichtung Z. Die erste Schwenkachse 68 ist durch eine imaginäre Verbindungslinie zwischen der Rückseite 44 und dem Deckel 46 definiert. Wenn die Tasche 16 den Rahmen 60-1 der Rückseite 44 und den Rahmen 60-2 des Deckels 46 aufweist, sind die entsprechenden Querstreben 46 parallel zur ersten Schwenkachse 68 angeordnet. Die beiden Querstreben 64 der Rückseite 44 und des Deckels 46 sind unterschiedlich lang, können aber gemeinsam in einem Kanal des Gewebes angeordnet sein, der z.B. durch ein Umnähen des Gewebes an der Rückseite 44 herstellbar ist. In diesem Fall kann auf Gelenke, Scharniere oder dergleichen verzichtet werden, um die beiden Rahmen 60-1 und 60-2 schwenkbar zueinander zu lagern. Der Deckel 46 kann in beiden möglichen Drehrichtungen um die Längsstrebe 64 des Rahmens 60-1 der Rückseite 44 verschwenkt werden. Aufgrund der Schwerkraft g, die in den vorliegenden Figuren entgegengesetzt zur Höhenrichtung Y wirkt, wird sich der Deckel 46, wenn sich die Tasche 16 in der in der Fig. 2 gezeigten aufgeklappten Stellung befindet, im Uhrzeigersinn um die erste Schwenkachse 46 nach unten bewegen, bis die Vorderseite 48 an der Rückseite 44 anliegt.

Ähnliches gilt für den Boden 50. Der Boden 50 ist um eine zweite horizontale Schwenkachse 70 schwenkbar mit der Rückseite 44 verbunden. Die Querstreben 64 der Rahmen 60-1 und 60-3 können z.B. wiederum in einem gemeinsamen Gewebekanal angeordnet sein, der sich parallel zur Querrichtung Z bzw. der zweiten Schwenkachse 70 erstreckt.

Wenn ein weiterer Rahmen 60 für die Vorderseite 48 vorgesehen ist, so kann dieser (in der Fig. 2 nicht dargestellte) Rahmen der Vorderseite 48 auf die gleiche Weise schwenkbar mit dem Deckel 46 und dem Boden 50 verbunden sein, wobei die Querstreben 64 der Rahmen 60 des Deckels 46, der Vorderseite 48 und des Bodens 50 auf entsprechende Weise jeweils in einem Gewebekanal liegen können. Auf diese Weise ist gewährleistet, dass im Fall separat vorgesehener Rahmen 60 diese schwenkbar aneinander gekoppelt sind und dauerhaft aneinander gekoppelt sind.

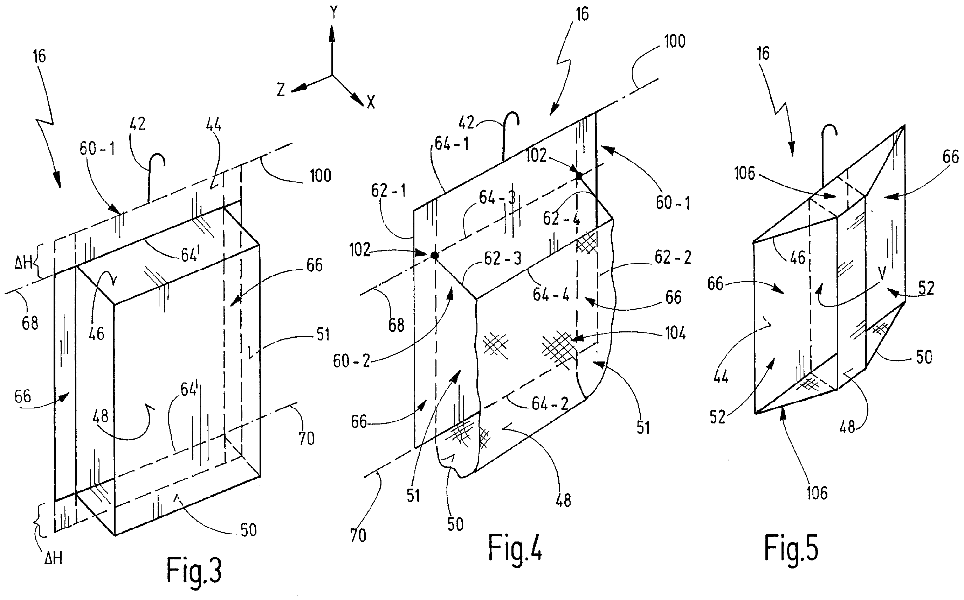

Die Rückseite 44 ist jeweils breiter als der Deckel 46, die Vorderseite 48 und der Boden 50 ausgebildet. Die Rückseite 44 weist eine Breite B1 entlang der Z-Richtung Z auf, die größer als die Breite B2 des Deckels 46, der Vorderseite 48 und des Bodens 50 ist. Diese Maßnahme stellt sicher, dass der Deckel 46, die Vorderseite 48 und der Boden 50 in der Beladestation 24 durch die Auslenkeinrichtung 21 aus der lotrechten Transportstellung in die horizontale Beladestellung gedreht und aufgeklappt werden können, wie es nachfolgend unter Bezugnahme auf einen Beladevorgang erläutert werden wird, der in den Fig. 1A bis 1E gezeigt ist. Die Rückseite 44 weist aufgrund der größeren Breite B1 zumindest einen seitlich außen liegenden Flügelbereich 66 auf. Da die Tasche 16 der Fig. 2 spiegelsymmetrisch (wegen einer besseren Gewichtsverteilung in Bezug auf den Hängeförderer 12) aufgebaut ist, sind zwei seitliche Flügelbereiche 66 vorgesehen. Jeder der Flügelbereiche 66 erstreckt sich in der Längsrichtung 58 der Rückseite 44 in einem Bereich der Rückseite 44, der nicht durch eine Projektion zumindest der Vorderseite 48 auf die Rückseite 44 abgedeckt ist, wenn man entlang der (negativen) Längsrichtung X in Fig. 2 auf die Tasche 16 blickt. Wenn die Grundformen des Deckels 46 und des Bodens 50 von einem Rechteck abweichen, z.B. trapezförmig ausgebildet sind (vgl. Fig. 5), so reduziert sich die Größe der Flügelbereiche 66 zusätzlich um die Projektion der Seitenwände 51. In der Fig. 2 weisen die Flügelbereiche 66 eine Breite auf, die jeweils der Hälfte der Differenz aus den Breiten B1 und B2 entspricht.

Die Flügelbereiche 66 sind Teil der Rückseite 44. In der Fig. 2 sind die Flügelbereiche 66 durch Hilfslinien 72 angedeutet, die parallel zur Höhenrichtung Y verlaufen.

Bezug nehmend auf die Fig. 1A bis 1E wird nachfolgend ein Beladevorgang beschrieben. Die Auslenkeinrichtung 21 weist in diesem Fall zwei Umlenkschienen 22 auf (vergleiche Fig. 1A), die in der Querrichtung Z spiegelsymmetrisch zur Führungsschiene 18 entfernt angeordnet sind und die, in einer Draufsicht (entlang der negativen Richtung Y), parallel zur Führungsschiene 18 des Hängeförderers 12 verlaufen. Die Umlenkschienen 22 sind z.B. kufenförmig ausgebildet, so dass die Flügelbereiche 66 gleitend über eine Oberseite der Umlenkschienen 22 gezogen werden können. Das Material der Rückseite 44 der Tasche 16 und/oder das Material der Umlenkschienen 22 weist vorzugsweise einen niedrigen Haftreibungskoeffizienten auf. Für das Gewebe der Taschen 16 können z.B. Polyamid-Fasern eingesetzt werden. Für das Material der kufenförmigen Umlenkschienen 22 kann z.B. Teflon oder ein Teflon-ähnlicher Werkstoff eingesetzt werden. Es versteht sich, dass anstatt kufenförmigen Umlenkschienen 22 auch Röllchenleisten oder Ähnliches eingesetzt werden können.

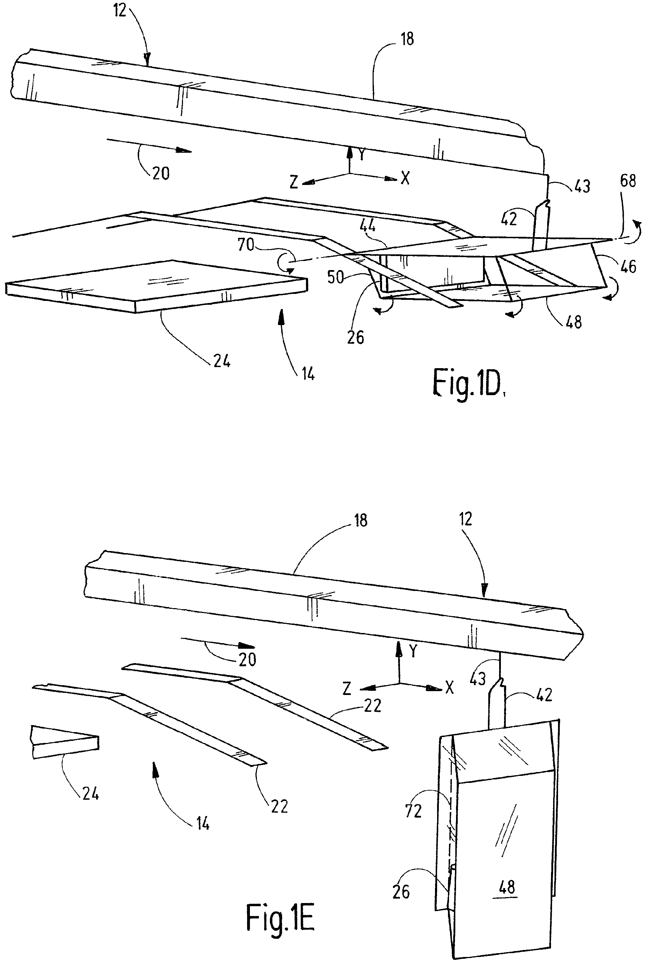

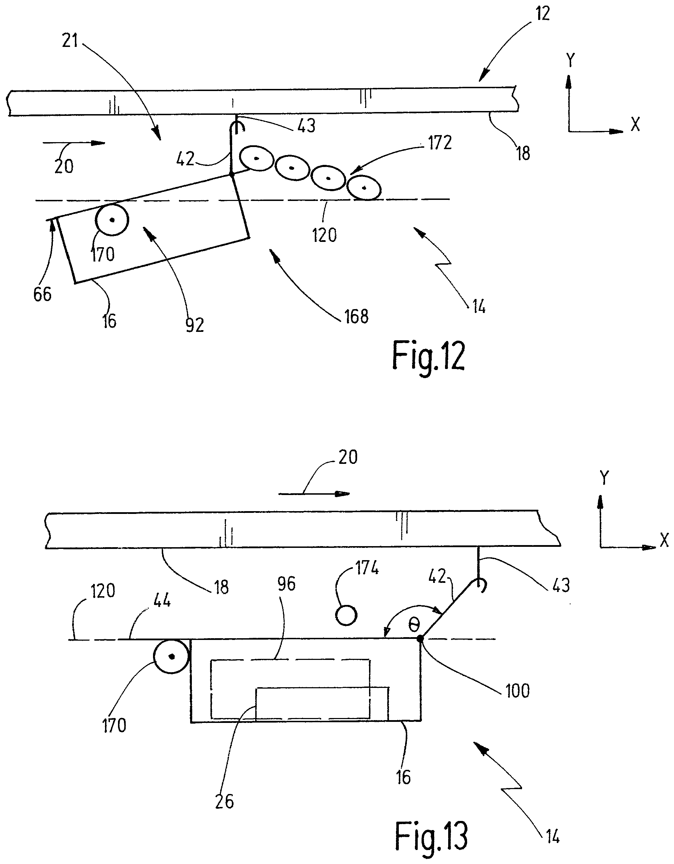

Jede der Umlenkschienen 22 bzw. die Auslenkeinrichtung 21 weist entlang der Längsrichtung X einen einleitenden Abschnitt 82, einen Beladeabschnitt 84 und/oder einen ausleitenden Abschnitt 86 auf. Jede der Umlenkschienen 22 weist zumindest den Beladeabschnitt 84 auf. Der Beladeabschnitt 84 ist vorzugsweise horizontal orientiert, d.h. der Beladeabschnitt 84 liegt in der Fig. 1 in der Ebene XZ. In der Fig. 1 ist auch der Hängeförderer 12 bzw. die Führungsschiene18 horizontal orientiert. Es versteht sich, dass der Hängeförderer 12 auch leicht abfallend gegenüber der horizontalen Ebene XZ orientiert sein kann, um den Hängeförderer 12 nicht motorisch angetrieben, sondern allein basierend auf Schwerkraft anzutreiben. In diesem Fall ist der Beladeabschnitt 84 der Auslenkeinrichtung 21 dennoch im Wesentlichen horizontal orientiert. Die Orientierung des Beladeabschnitts 84 der Umlenkschienen 22 definiert die Orientierung der Beladestellung. Der Begriff "im Wesentlichen horizontal orientiert" umfasst auch Ausrichtungen des Beladeabschnitts 84, die leicht gegenüber der horizontalen Ebene XZ, z.B. ± 5°-10°, geneigt sind. Es versteht sich, dass der Beladeabschnitt 84 der Auslenkeinrichtung 21 nicht durchgehend (in der Längsrichtung X) verkörpert vorhanden sein muss, wie es für die Umlenkschienen 22 der Fall ist. Bei anderen Ausgestaltungen der Auslenkeinrichtung 21 kann der Beladeabschnitt 84 auch nur durch einen Raumbereich definiert sein, in welchem die Tasche 16 in der Beladestellung (vergleiche z.B. Fig. 13) orientiert ist. Der Beladeabschnitt 84 der Auslenkeinrichtung 21 definiert die Beladestellung der Tasche 16.

Bei der in der Fig. 1 gezeigten Ausführungsform der Umlenkschienen 22 steigt der einleitende Abschnitt 82 leicht gegenüber der horizontalen Ebene XZ an, z.B. mit einem Winkel von 10°-20°. Der ausleitende Abschnitt 86 fällt leicht gegenüber der horizontalen Ebene XZ ab, z.B. mit einem Winkel von 10°-20°. Im Beispiel der Fig. 1 sind der einleitende Abschnitt 82 und der ausleitende Abschnitt 86 spiegelsymmetrisch zum Beladeabschnitt 84 ausgebildet und angeordnet. Der ausleitende Abschnitt 86 stellt ein stromabwärts gelegenes Ende 88 der Auslenkeinrichtung 21 dar. Der einleitende Abschnitt 82 stellt ein stromaufwärts gelegenes Ende 90 der Auslenkeinrichtung 21 dar, wie es in Fig. 1A gezeigt ist.

Ein lichter Abstand der Umlenkschienen 22 in der Querrichtung Z entspricht im Wesentlichen der Breite B2 des Deckels 46, der Vorderseite 48 und des Bodens 50. Eine Breite der Umlenkschienen 22 ist so gewählt, dass ein Abstand der in Bezug auf die Führungsschiene 18 außen liegenden Ränder der Umlenkschienen 22 in der Querrichtung Z der Breite B1 der Rückseite 44 der Tasche 16 entspricht. Der Abstand zwischen den Umlenkschienen 22 und die jeweilige Breite der Umlenkschienen 22 ist so gewählt, dass die Flügelbereiche 66 sicher auf den Umlenkschienen 22 aufliegen können und der Deckel 46, die Vorderseite 48 sowie der Boden 50 zwischen den Umlenkschienen 22 durchhängen können.

Ausgehend von der Fig. 1A, die eine Einfahrt der (leeren) Tasche 16 in die Beladestation 14 zeigt, stößt die Tasche 16 mit ihren Flügelbereichen 66 bei einer fortgesetzten Transportbewegung gegen das stromaufwärts gelegene Ende 90 der Auslenkeinrichtung 21 an. Diese Situation ist in Fig. 1B gezeigt. Der einleitende Abschnitt 82 der Umlenkschienen 22 kommt in Eingriff mit den Flügelbereichen 66 der Rückseite 44 der Tasche 16. Stromaufwärts gelegene Enden der Umlenkschienen 22 stellen Schwenkelemente 92 dar, die eine weitere Achse 94 definieren. Die weitere Achse 94 ist horizontal entlang der Querrichtung Z orientiert. Die Tasche 16 dreht bei fortgesetzter Förderbewegung im Uhrzeigersinn um die Schwenkachse 68 aus der lotrechten Transportstellung (Fig. 1A) in die horizontale Beladestellung der Fig. 1C. Während sich die Tasche 16 um die Schwenkachse 68 dreht, wird die Rückseite 44 der Tasche 16 gegenüber der Aufhängeeinrichtung 40 verschwenkt. Gleichzeitig löst sich die Vorderseite 48 aufgrund der Schwerkraft von der Rückseite 44. Der Deckel 46 schwingt um die erste Schwenkachse 66 gegen den Uhrzeigersinn auf. Der Boden 50 schwingt um die zweite Schwenkachse 70 gegen den Uhrzeigersinn auf. Die Tasche 16 beginnt sich zu drehen und aufzuklappen.

Bei einer fortgesetzten Transportbewegung wird die Tasche 16 so Stück für Stück durch den Mitnehmer 43 über den Haken 42 in die horizontale Beladestellung gezogen, wie es in Fig. 1C gezeigt ist. Außer einer Bewegung des Hängeförderers 12 sind keine weitere Aktuatoren zum Drehen oder Überwinden einer Höhendifferenz vorgesehen. In der Fig. 1C liegen die Flügelbereiche 66 flächig entlang ihrer gesamten Länge auf den kufenförmigen Umlenkschienen 22 auf. Die Tasche 16 ist im Beladeabschnitt 84 der Auslenkeinrichtung 21 angeordnet. Die Tasche 16 ist in der horizontalen Beladestellung vollständig aufgeklappt. Der Deckel 46 hängt von der horizontal ausgerichteten Rückseite 44 senkrecht nach unten. Der Boden 50 hängt von der Rückseite 44 senkrecht nach unten. Die Vorderseite 48 ist parallel zur Rückseite 44 orientiert. In der Seitenansicht bilden die Rückseite 44, der Deckel 46, die Vorderseite 48 und der Boden 50 ein Parallelogramm.

Funktional dient die Vorderseite 48 in der Beladestellung der Fig. 1C als Boden. Die optionale Zuführplattform 24 ist mit ihrer Oberseite vorzugsweise auf einer Höhe relativ zu einer Oberseite der Vorderseite 48 angeordnet, so dass die Ware 26 stufenfrei seitlich, d.h. entlang der Querrichtung Z, in die aufgeklappte Tasche 16 bewegt werden kann. Diese Beladebewegung ist in der Fig. 1C durch einen Pfeil 28 angedeutet. Die Einführbewegung kann manuell oder automatisiert erfolgen. Zur automatisierten Einführung der Ware 26 in die aufgeklappte Tasche 16 kann ein Schieber 96 vorgesehen sein, der auf einer entsprechenden Höhe angeordnet ist. In der Fig. 1C ist der Schieber 96 durch Strichlinien angedeutet. Der Schieber 96 bewegt sich parallel zur Querrichtung Z, wie es durch einen Pfeil 98 angedeutet ist, und kann über nicht dargestellte Förderer mit den Waren 26 versorgt werden, die geladen werden müssen.

Die Zuführplattform 24 ist so relativ zu einer Außenkante der Vorderseite 48 orientiert, dass die Außenkante der Vorderseite 48 der Tasche 16 möglichst bündig an eine gegenüberliegende Außenkante der Zuführplattform 24 anschließt. Der bündige und nahezu stufenlose Anschluss der Zuführplattform 24 an die Vorderseite 48 gewährleistet eine schonende Behandlung der Liegeware 26. Die Liegeware 26 bleibt während eines Transfers von der Zuführplattform 24 in die Tasche 16 stets gleich orientiert, nämlich liegend. Die Liegeware 26 fällt nicht in die Tasche 16. Die liegende Orientierung der Liegeware 26 bleibt erhalten. Dies erhöht auch die Ergonomie einer manuell betriebenen Beladestation. Die Liegeware 26 wird nicht beschädigt. Bei einer automatisierten Zuführung kann eine hohe Leistung erzielt werden. Bei einer automatisierten Zuführung kann die Zuführplattform 24 zwecks Versorgung mit neuer Liegeware 26 mit einer Hubfunktion versehen sein.

Während der seitlichen Beladung kann die Transportbewegung der Tasche 16 in der Förderrichtung 20 auch entweder unterbrochen oder verlangsamt werden. Dies hängt insbesondere von der Fördergeschwindigkeit des Hängeförderers 12 ab. Die Einführbewegung der Ware 26 und die Transportbewegung der Tasche 16 durch die Beladestation 14 können so aufeinander abgestimmt werden, dass der Hängeförderer 12 kontinuierlich, d.h. ohne Unterbrechung der Transportbewegung in der Beladestellung der Fig. 1C, betrieben werden kann. Dies stellt wiederum eine leistungssteigernde Maßnahme dar. Ein kontinuierlicher Transport durch die Beladestation 14 ist bevorzugt.

Bezug nehmend auf Fig. 1D ist gezeigt, wie sich die beladene Tasche 16 aus der horizontalen Beladestellung der Fig. 1C wieder in die lotrechte Transportstellung zurückbewegt. Die Tasche 16 hat aufgrund der fortgesetzten Transportbewegung des Hängeförderers 12 den Beladeabschnitt 84 in Richtung des ausleitenden Abschnitts 86 verlassen. Die Tasche dreht um die erste und zweite Schwenkachse 68 und 70 gegen den Uhrzeigersinn. Die Tasche 16 liegt mit den Flügelbereichen 66 der Rückseite 44 auf den Umlenkschienen 22 auf. Der ausleitende Abschnitt 86 der Umlenkschienen 22 ruft eine sanfte Schwenkbewegung zurück in die lotrechte Transportstellung hervor, wobei die Flügelabschnitte 66 im Bereich der zweiten Schwenkachse 70 auf den Umlenkschienen 22 gleitend aufliegen. Der Deckel 46, die Vorderseite 48 und der Boden 50 klappen aufgrund der Schwerkraft im Uhrzeigersinn in Richtung der Rückseite 44 zurück, soweit es die in das innere der Tasche 16 geladene Ware 26 zulässt. Die geladene Ware 26 verhindert, dass sich die Vorderseite 48 in der lotrechten Transportstellung vollflächig an die Rückseite 44 anlegt, wie es im leeren Zustand der Tasche 16 der Fall ist. Dieser Zustand (beladene Tasche 16 in lotrechter Transportstellung) ist in der Fig. 1E gezeigt.

In der Fig. 1E hat die Tasche 16 die Umlenkschienen 22, und somit die Auslenkeinrichtung 21 bzw. die Beladestation 14, verlassen. Die Tasche 16 hängt wieder lotrecht über den Haken lotrecht am Mitnehmer 43 des Hängeförderers 12. Die geladene Ware 26 gleitet aufgrund der Schwerkraft innerhalb der Tasche 16 nach unten und spannt dann den Deckel 46, die Vorderseite 48 und den Boden 50 gegenüber der Rückseite 44. Insbesondere die Vorderseite 48 liegt eng an der geladenen Ware 26 an und verhindert so ein unbeabsichtigtes (seitliches) Herausfallen der Ware 26 aus der Tasche 16.

In den Fig. 3 bis 5 sind nachfolgend mögliche Abwandlungen der Tasche 16 jeweils in einer perspektivischen Ansicht gezeigt, die gemäß der Erfindung einsetzbar sind.

In Fig. 3 ist eine Tasche 16 gezeigt, die leicht gegenüber der Tasche 16 der Fig. 2 abgewandelt ist. Die Tasche 16 der Fig. 3 unterscheidet sich in der Länge der Rückseite 44 gegenüber der Tasche 16 der Fig. 2. Die Tasche 16 der Fig. 3 ist länger. Dies ist in der Fig. 3 durch einen Höhenunterschied ΔH ausgedrückt. Die längere Rückseite 44 ist durch Strichlinien angedeutet. Sowohl der obere Abschnitt 54 als auch der untere Abschnitt 56 der Rückseite 44 sind in der Fig. 3 länger als in der Fig. 2 ausgebildet. Es versteht sich, dass auch nur einer der beiden Abschnitte 54 oder 56 länger ausgebildet sein kann. Wenn die Rückseite 44 einen Rahmen 60-1 aufweist, so ist dieser Rahmen 60-1 hinsichtlich seiner Abmessungen entsprechend angepasst, um vorzugsweise im äußeren Randbereich der Rückseite 44 angeordnet zu sein. Der Deckel 46 und der Boden 50 sind weiterhin schwenkbar um die Schwenkachsen 68 und 70 relativ zur Rückseite 44 angeordnet. Der Rahmen 60-1 kann zusätzliche Querstreben 64' aufweisen, die parallel zur Querrichtung Z orientiert sind und die die Schwenkachsen 68 und 70 definieren. Die zusätzlichen Querstreben 64' können mit hier nicht näher bezeichneten Querstreben 64 der hier ebenfalls nicht näher bezeichneten Rahmen 60-2 des Deckels 46 und 60-3 des Bodens 50 jeweils in einem gemeinsamen Gewebekanal liegen, der durch Umnähen des Gewebes der Rückseite 44 herstellbar ist. Die zusätzlichen Querstreben 64' sind vorzugsweise mit den Längsstreben 62 des Rahmens 60-1 verbunden.

Die Tasche 16 der Fig. 3 unterscheidet sich ferner von der Tasche 16 der Fig. 2 dadurch, dass der Deckel 46 in der Fig. 3 geschlossen ausgebildet ist. Auch könnte eine der beiden Seitenwände 51 zusätzlich geschlossen ausgebildet sein, so dass eine Be- und Entladung allein über eine einzige Seitenwand 51 erfolgt.

Die sich in der Querrichtung Z erstreckenden Bereiche der Rückseite 44, die eine Projektion der Vorderseite 48 entlang der Richtung X überragen, also die Bereiche oberhalb des Deckels 46 und unterhalb des Bodens 50, können zur zusätzlichen Handhabung der Tasche 16 benutzt werden. Der in der Längsrichtung X überragende untere Bereich im unteren Abschnitt 56 der Rückseite 44 kann z.B. eingesetzt werden, um die Tasche 16, bei offen ausgebildetem Deckel 46, aus der Beladestellung (Fig. 1C) anzuheben, so dass der offen ausgebildete Deckel 46 als Entladeöffnung nutzbar ist, aus der geladene Waren 26 allein aufgrund von Schwerkraft aus der Tasche 16 rutschen können. Ein derartiges Entladeprinzip wir unter Bezugnahme auf die Fig. 8 bis 10 noch näher beschrieben werden.

In der Fig. 4 ist eine weitere abgewandelte Tasche 16 gezeigt. Die Tasche 16 der Fig. 4 weist ebenfalls eine formstabile Rückseite 44, einen (optional offen ausgebildeten) Deckel 46, eine Vorderseite 48 und einen Boden 50 auf, die wiederum dauerhaft miteinander verbunden sind. Die Seitenwände 51 sind offen ausgebildet. Die Rückseite 44 kann einen außen umfänglich angeordneten Rahmen 60-1 aufweisen, der wiederum eine linke Längsstrebe 62-1, eine rechte Längsstrebe 62-2, eine obere Querstrebe 64-1 und eine untere Querstrebe 64-3 aufweist. Die Rückseite 44 ist vorzugsweise rechteckig ausgebildet. Wie bei der Tasche 16 der Fig. 3 kann eine weitere Querstrebe 64-3 im Bereich der ersten Schwenkachse 68 vorgesehen sein.

Der Deckel 46 ist offen ausgebildet und kann einen Rahmen 60-2 aufweisen. Der Rahmen 60-2 der Fig. 4 ist dreiteilig ausgebildet. Der Rahmen 60-2 weist eine erste Längsstrebe 62-3 und eine zweite Längsstrebe 62-4 sowie eine Querstrebe 64-4 auf, die gemeinsam mit der ersten Schwenkachse 68 ein Rechteck umschließen. Die Seitenwände 51 der Tasche 16 der Fig. 4 sind ebenfalls offen ausgebildet. Die Vorderseite 48 und der Boden 50 sind einstückig ausgebildet. Die Vorderseite 48 und der Boden 50 können in Form einer Gewebebahn realisiert sein, die an eine nicht näher bezeichnete untere Kante der Rückseite 44 z.B. angenäht ist. Seitliche Ränder der Textilbahn können gekettelt ausgebildet sein. In der Ausgestaltung der Fig. 4 ist der Boden 50 ohne Rahmen vorgesehen. Dennoch ist der textile Boden 50 schwenkbar um die zweite Schwenkachse 70 relativ zur Rückseite 44.

Die Aufhängeeinrichtung 40 bzw. der Haken 42 ist, wie in Fig. 3, an einer oberen Kante der Rückseite 44 mittig und drehbar um eine Schwenkachse 100 gelagert. Auch die Rückseite 44 kann mit einem textilen Gewebe 104 bespannt sein. Das Gewebe 104 wird auch zur Ausbildung der Vorderseite 48 und des Bodens 50 genutzt.

Der Rahmen 60-2 des Deckels 46 kann über Scharniere 102 mit der Rückseite 44 verbunden sein. Der Rahmen 60-2 weist dann nur zwei Längsstreben und eine Querstrebe auf. Alternativ kann der Rahmen 60-2 auch gar keine Streben aufweisen, sondern allein aus einem gekettelten oberen Rand der Vorderseite 48 und aus Kordeln oder Ähnlichem bestehen, die die Funktion der Längsstreben übernehmen und die Vorderseite 48 mit der Rückseite 44 gelenkig verbinden. Die Kordeln können an die Rückseite angenäht werden, um die Scharniere 102 zu ersetzen.

Aufgrund der optionalen rahmenlosen Ausgestaltung des Bodens 50 sowie der einstückigen Ausbildung des Bodens 50 mit der Vorderseite 48 ist die Tasche 16 der Fig. 4 äußerst flexibel und kann sich gut an eine Form einer geladenen Ware 26 anpassen. Ein Druck auf Außenflächen der Ware 26 durch die Vorderseite 48 und den Boden 50 wird minimiert. Es werden wenige Teile zur Herstellung der Tasche 16 benötigt.

In Fig. 5 ist eine beispielhafte Tasche 16 gezeigt, die das Verständnis der Erfindung erleichtert. Die Tasche 16 der Fig. 5 weist eine wesentlich schmalere Vorderseite 48 als die erfindungsgemäßen Taschen der Fig. 2 bis 4 auf, ist aber vorzugsweise genauso lang wie die Rückseite 44. Der Deckel 46 und der Boden 50 weisen in diesem Fall eine z.B. trapezförmige Grundfläche 106 auf. Die Flügelbereiche 66 der Rückseite 44 sind entsprechend größer als in den Fig. 2 bis 4. Wie zuvor, sind die Vorderseite 48, der Boden 50 und die Rückseite 44 in der Fig. 5 im Wesentlichen geschlossen ausgebildet. Der Deckel 46 kann offen oder geschlossen ausgebildet sein. Die Seitenwände 51 können entsprechend offen oder geschlossen ausgebildet sein. In der Fig. 5 sind zwei seitliche Öffnungen 52 im Bereich der Seitenwände 51 gezeigt. Der Boden 50 kann aus einem flexiblen Gewebe mit der trapezförmigen Fläche 106 hergestellt sein. Kanten, die die Rückseite 44 mit der Vorderseite 48 verbinden, sind ohne Streben ausgebildet, die Kanten sind vorzugsweise gekettelt, um eine ausreichende Flexibilität zu gewährleisten, da diese Kanten die Flügelbereiche 66 überlappen und ebenfalls in Anlage mit der Auslenkeinrichtung 21 kommen. In der Beladestellung liegt die Tasche 16 der Fig. 5 sowohl auf den Flügelbereichen 66 als auch teilweise auf dem Boden 50 auf. Ein effektives Ladevolumen ist kleiner als ein maximal mögliches Ladevolumen V. Das maximal mögliche Ladevolumen V wird durch die Vorderseite 48 bzw. deren Projektion auf die Rückseite 44 entlang der negativen Längsrichtung X definiert und ist in Fig. 5 durch Strichlinien angedeutet.

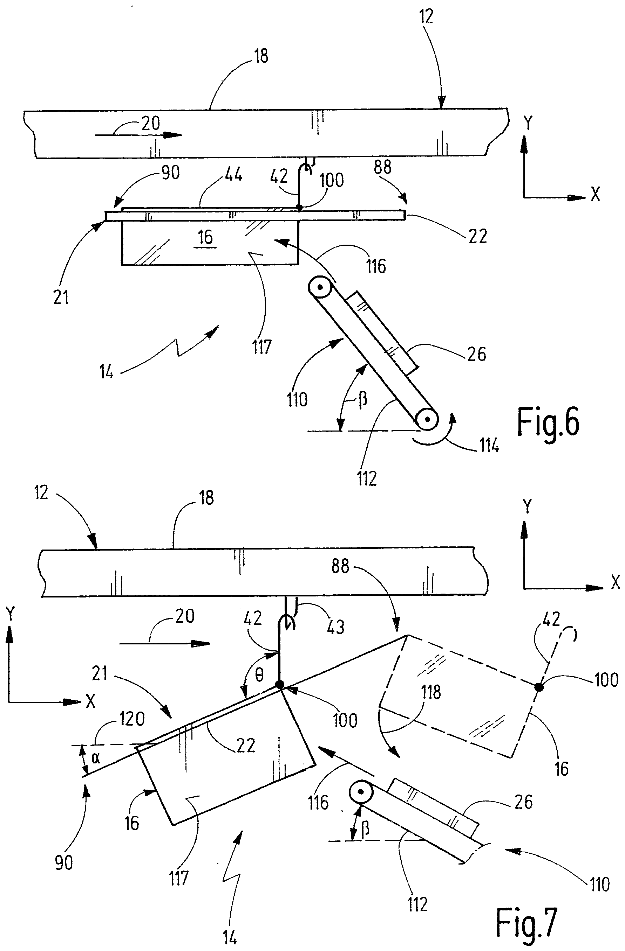

Fig. 6 zeigt eine Seitenansicht einer Beladestation 14, die gegenüber der Beladestation 14 der Fig. 1 abgewandelt ist. Die Tasche 16 entspricht dabei der Ausgestaltung gemäß Fig. 2. Die Beladestation 14 weist gerade Umlenkschienen 22 auf.

Die Beladestation 14 der Fig. 6 weist wiederum eine Auslenkeinrichtung 21 auf, die wiederum z.B. ein Paar von Umlenkschienen 22 aufweist, wobei in der Seitenansicht der Fig. 6 lediglich eine Umlenkschiene 22 zu sehen ist, die die andere Umlenkschiene 22 überdeckt. Die Umlenkschienen 22 sind jeweils mit nur einem Abschnitt ausgebildet, der dem Beladeabschnitt 84 der Fig. 1 entspricht. Ansteigende oder abfallende Abschnitte gibt es nicht. Die Umlenkschienen 22 sind parallel zur Führungsschiene 18 des Hängeförderers 12 orientiert. Die Umlenkschienen 22 liegen in einer horizontalen Ebene, die durch die Richtungen X und Z aufgespannt wird, wobei weiterhin von einem kartesischen Koordinatensystem XYZ ausgegangen wird.

Der einleitende Abschnitt 82, der Beladeabschnitt 84 und der ausleitende Abschnitt 86, wie er in der Fig. 1A gezeigt ist, wird hier jeweils durch eine einzige geradlinige Umlenkschiene 22 realisiert. Ein vertikaler Abstand zwischen einer Oberseite der Umlenkschienen 22 und einer Unterseite der Führungsschiene 18 ist so gewählt, dass das stromaufwärts gelegene Ende 90 der Auslenkeinrichtung 21 tiefer als eine Oberkante der Rückseite 44 liegt, wenn die Tasche 16 in ihrer lotrechten Transportstellung durch die (kontinuierliche) Transportbewegung des Hängeförderers 12 in Eingriff mit den Umlenkschienen 22 kommt. Durch die fortgesetzte Transportbewegung des Hängeförderers 12 wird die Tasche 16 mit ihren Flügelbereichen 66, die hier nicht näher bezeichnet sind, auf die Umlenkschienen 22 aufgezogen, bis die Tasche 16 in ihrer horizontalen Beladestellung ist. Stromaufwärts ist alternativ zur seitlichen Zuführplattform 24 der Fig. 1 ein zentraler Zuführförderer 110 vorgesehen. Der Zuführförderer 110 kann in Form eines Band- oder Gurtförderers 112 realisiert sein, der endlos umläuft, wie es durch einen Pfeil 114 angedeutet ist. Der Zuführförderer 110 ist parallel zur Förderrichtung 20 und in der Querrichtung Z symmetrisch zur Führungsschiene 18 angeordnet. Der Zuführförderer 110 weist einen Anstellwinkel β gegenüber der Horizontalen auf, die in Fig. 6 durch eine Strichlinie angedeutet ist und die parallel zur Richtung X verläuft. Der Anstellwinkel β des Zuführförderers 110 ist so gewählt, dass, in Abhängigkeit von der Geschwindigkeit, mit der die Ware 26 auf dem Zuführförderer 110 transportiert wird, die Ware 26 in die Tasche 16 eingeführt werden kann. Die Fig. 6 zeigt also eine Möglichkeit, die Tasche 16 frontal zu beladen. Die frontale Beladung ist in der Fig. 6 durch einen Pfeil 116 angedeutet. Wenn die Tasche 16 der Fig. 6 frontal beladen wird, können die Seitenwände (vergleiche Position 51 in Fig. 2) geschlossen ausgebildet sein, wie es in der Fig. 6 durch einen Pfeil 117 angedeutet ist.

Die Umlenkschienen 22 können den Zuführförderer 110 stromabwärts soweit überragen, dass die Tasche 16 beim Verlassen der Umlenkschienen 22 nicht mit dem Zuführförderer 110 und/oder einer gerade neu zugeführten Ware 26 kollidieren. Wenn die Tasche 16 die in der Fig. 6 gezeigte Beladeposition durch eine fortgesetzte Transportbewegung verlässt, bleiben die Flügelbereiche 66 der Rückseite 44 noch längere Zeit mit den Umlenkschienen 22 in Kontakt. Erst wenn ein hinteres bzw. unteres Ende der Flügelbereiche 66 der Tasche 16 das stromabwärts gelegene Ende 88 der Umlenkeinrichtung 21 erreichen, löst sich die Tasche 16 von den Umlenkschienen 22 und schwingt um eine horizontale Drehachse 100, die durch den Verbindungspunkt des Hakens 42 mit der Rückseite 44 (vergleiche auch Fig. 3 und 4) verläuft, in die lotrechte Transportstellung.

Es versteht sich, dass ein vertikaler und horizontaler Abstand des Zuführförderers 110 zur Tasche 16, wenn diese sich in der Beladeposition befindet, entsprechend zu wählen ist. Wenn die Umlenkschiene 22 in der Richtung X ausreichend lang ist, kann der Anstellwinkel β sehr klein, z.B. in einem Bereich um die 5° herum, gewählt werden, so dass eine Höhendifferenz zwischen einer Oberseite des Zuführförderers 110 und der Vorderseite 48 der Tasche 16 in der Beladestellung minimal und praktisch vernachlässigbar ist, ohne dass die Tasche 16 während einer Passage des Zuführförderers 110 in Kontakt mit dem Zuführförderer 110 kommt.

Aber auch die Umlenkschiene 22 kann um einem Winkel α geneigt sein, wie es exemplarisch in der Seitenansicht der Fig. 7 gezeigt ist. Die Lage der Umlenkschiene 22 der Fig. 6 ist in Fig. 7 durch eine Hilfslinie 120 angedeutet. Gegenüber dieser Hilfslinie 120 weist die Umlenkschiene 22 der Fig. 7 einen Anstellwinkel α auf. Der Abstand zwischen der Umlenkschiene 22 und der Unterseite der Führungsschiene 18 verringert sich also stromabwärts. Diese Abstandsänderung wird dadurch ausgeglichen, dass der Haken 42 schwenkbar um die Achse 100 an der Tasche 16 angebracht ist. Je weiter sich die Tasche 16 dem stromabwärts gelegenen Ende 88 der Umlenkeinrichtung 21 nähert, desto größer wird ein Winkel θ zwischen dem Haken 42 und der Rückseite 44. Der Anstellwinkel α der Umlenkschienen 22, die wiederum paarweise vorgesehen sind, ermöglicht es, den Anstellwinkel β des Zuführförderers 110 zu minimieren. Die Länge der Umlenkschienen 22 kann gegenüber der Ausführungsform der Fig. 6 verkürzt werden, da durch den Anstellwinkel α mehr Raum für eine Abschwingbewegung der Tasche 16 zur Verfügung steht, wenn die Tasche 16 die Umlenkschienen 22 verlässt. Dies ist in der Fig. 7 durch einen kreisbogenförmigen Pfeil 118 angedeutet, dessen Zentrum die Achse 100 der durch eine Strichlinie angedeuteten Tasche 16 darstellt.

Unter Bezugnahme auf die Fig. 8 bis 11 und Fig. 14 werden verschiedene Ausgestaltungen von Entladestationen 130 beschrieben werden.

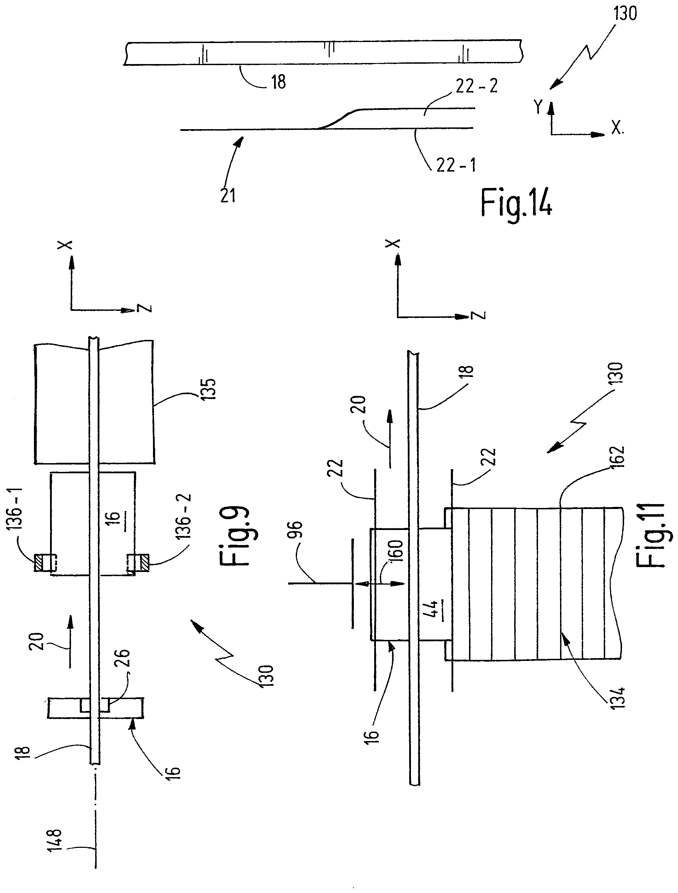

Fig. 8 zeigt eine Seitenansicht einer ersten Entladestation 130. Die Entladestation 130 umfasst eine Hubeinrichtung 132. Die Entladestation 130 kann einen Abführförderer 134 aufweisen, der vorzugsweise in Form eines Stetigförderers, wie z.B. in Form eines Bandförderers 135, ausgebildet ist. Die Hubeinrichtung 132 kann ein Paar von Hubhaken 136 aufweisen, die symmetrisch zur Führungsscheine 18 des Hängeförderers 12 angeordnet sind, wie es in der Draufsicht der Fig. 9 gezeigt ist. Die Tasche 16 der Fig. 8 und 9 weist wiederum eine breitere Rückseite 44 auf. An der Rückseite 44 ist ein offen ausgebildeter Deckel 46 schwenkbar gelagert. Der geschlossen ausgebildete Boden 50 ist ebenfalls schwenkbar an der Rückseite 44 angeordnet. Der Deckel 46 und der Boden 50 sind über die geschlossen ausgebildete Vorderseite 48 miteinander verbunden. Die Seitenwände 51 sind offen ausgebildet.

In der Fig. 8 ist links eine beladene Tasche 16-1 in der lotrechten Transportstellung gezeigt. Rechts ist eine weitere Tasche 16-2 während eines Entladevorgangs in einer Entladestellung gezeigt. Die Hubhaken 36 greifen an die Flügelbereiche 66 der unteren Abschnitte 56 an und heben den unteren bzw. den hinteren Teil der Tasche 16 soweit gegenüber der Horizontalen an, die in der Fig. 8 durch eine Hilfslinie 142 angedeutet ist, dass die Tasche 16 mit einem Winkel γ angestellt ist. Aufgrund von Schwerkraft rutscht die geladene Ware 26 selbsttätig frontal aus der Tasche 16 auf den optional vorgesehenen Abführförderer 134.

Zum Entladen der Tasche 16 kann der Hängeförderer diskontinuierlich betrieben werden. Sobald die Tasche 16 eine entsprechende Position unterhalb der Hubhaken 136 eingenommen hat, können die Hubhaken 136 in den unteren Abschnitt 56 der Rückseite 44 bewegt und in Eingriff mit den Flügelbereichen 66 gebracht werden, um die Rückseite 44 in die in der Fig. 8 gezeigte Entladestellung zu bewegen. Die Hubhaken 136 können dabei vertikal und/oder horizontal bewegt werden, wie es durch Pfeile 138 und 140 angedeutet ist.

Die Waren 26 fallen dann auf den Bandförderer 135, wie es durch einen Pfeil 144 angedeutet ist und können dann abtransportiert werden, wie es durch einen Pfeil 146 angedeutet ist. Der Bandförderer 135 schließt vorzugsweise bündig an ein stromabwärts gelegenes Ende der Tasche 16 in der Entladeposition an. Der Bandförderer 135 ist vorzugsweise mittig zur Symmetrieebene 148 angeordnet, die sich parallel zu einer Ebene XY und parallel zur Förderrichtung 20 bzw. der Führungsschiene 18 erstreckt (vergleiche Fig. 9).

Anstatt Hubhaken 136 können alternativ Hubstifte 150 eingesetzt werden, wie es exemplarisch in der Seitenansicht der Fig. 10 gezeigt ist. Die Hubstifte 150 sind unterhalb der Tasche 16 in der Entladestellung angeordnet und werden zum schrägen Anheben der Tasche 16 von unten nach oben (parallel zur Höhenrichtung Y) ausgefahren, wie es durch den Pfeil 138 angedeutet ist. In Abhängigkeit davon, ob der Hängeförderer 12 während eines Entladevorgangs kontinuierlich oder diskontinuierlich betrieben wird, können die Hubstifte 150 auch in der horizontalen Richtung bewegbar ausgebildet sein, wie es durch den Pfeil 140 angedeutet ist.

Der Abführförderer 134 kann schwenkbar ausgebildet sein, wie es durch einen Pfeil 152 angedeutet ist, um eine Fallhöhe FH zu minimieren. Die Fallhöhe FH ist durch einen vertikalen Abstand zwischen einer Unterkante der Tasche 16 in ihrer Entladestellung und einer Oberkante des Abführförderers 134 definiert.

In der Fig. 11 ist eine weitere Entladestation 130 in einer Draufsicht gezeigt, bei der ein Schieber 96 zum seitlich horizontalen Entladen eingesetzt wird. Eine Ausschubbewegung ist durch einen Doppelpfeil 160 angedeutet. Die Beladestation 130 der Fig. 11 umfasst ein Paar von Umlenkschienen 22, die genauso wie das Umlenkschienenpaar der Fig. 1 oder 6 ausgebildet und orientiert sein kann. Die Beladestation 14 der Fig. 1 kann beispielsweise gleichzeitig als Entladestation 130 eingesetzt werden, wenn gegenüberliegend zur Zuführplattform 24 ein Abführförderer 134 angeordnet wird und der Schieber 96 (vergleiche Fig. 1C) ausreichend weit in die Tasche 16 eingefahren werden kann, um eine geladene Ware 26 auf der gegenüberliegenden Seite zu entladen. Auf die gleiche Weise wirkt der in der Fig. 11 gezeigte Schieber 96, der parallel zur Querrichtung Z horizontal beweglich ausgebildet ist und auf einen Abführförderer 134 ausschiebt, der z.B. als Rollenförderer 162 ausgebildet sein kann. Es versteht sich, dass die Tasche 16 in diesem Fall offen ausgebildete Seitenwände 51 aufweist, und zwar auf beiden Seiten.

Fig. 14 zeigt eine Seitenansicht einer weiteren Entladestation 130, die zwei Umlenkschienen 22-1 und 22-2 aufweist. Anders als bei den Beladestationen 14, sind die Umlenkschienen 22 nur einleitend auf gleicher Höhe angeordnet. Eine der beiden Umlenkschienen 22, hier die Umlenkschiene 22-2, steigt stromabwärts in der Höhe an, um die Taschen 16 um die Längsrichtung X zu kippen. In einer derart gekippten Entladestellung können die Ware selbsttätig aus den Taschen 16 gleiten, und zwar ohne dass die Bewegung des Hängeförderers 12 dazu unterbrochen werden muss. Es versteht sich, dass die Umlenkschienen 22-1 und 22-2 in der Querrichtung Z wiederum einen lichten Abstand der Breite B2 haben.

Fig. 14 zeigt eine Entladestation 130, die keine Hubeinrichtung 132, sondern eine Auslenkeinrichtung 21 aufweist.

Fig. 12 zeigt eine Seitenansicht einer weiteren Alternative für eine Beladestation 14 in einer Seitenansicht. Die Beladestation 14 der Fig. 12 weist eine Auslenkeinrichtung 21 auf, die mehrteilig aufgebaut ist. Anstatt eines Paars von einteilig ausgebildeten Umlenkschienen 22 (vergleiche Fig. 1, 6 und 7) ist anstatt jeder Umlenkschiene 22 eine Rollenanordnung 168 vorgesehen. Die Rollenanordnung 168 kann mehrteilig ausgebildet sein. In der Fig. 12 ist die Rollenanordnung 186 zweiteilig ausgebildet und weist eine stromaufwärts gelegene Einzelrolle 170 sowie eine stromabwärts dazu gelegene separate Rollenbahn 172 auf. Die Rollenbahn 172 erstreckt sich im Wesentlichen linear und ist gegenüber der horizontalen Richtung X abwärts fallend geneigt. In der Fig. 12 ist die relative Lage des Beladeabschnitts 84 der Fig. 1A in Form der Strichlinie 120 (siehe auch Fig. 7) als Referenz eingezeichnet. In der Beladeposition liegt die Tasche 16 mit ihren Flügelbereichen 66 im Wesentlichen auf der Hilfslinie 120 auf. Die stromaufwärts gelegene Rolle 120 stellt das am stromaufwärts gelegenen Ende 90 der Auslenkeinrichtung 21 angeordnete Schwenkelement 92 (vergleiche Fig. 1B) dar, wobei dieses bei einer fortgesetzten Transportbewegung der Tasche 16 zuerst mit der Rückseite 44 der Tasche in Eingriff kommt. Die Einzelrolle 170 ruft die Drehbewegung der Tasche 16 aus ihrer lotrechten Transportstellung in die horizontale Beladestellung hervor. Die Flügelbereiche 66 rollen mit ihrer gesamten Länge geführt über die Einzelrolle 70 ab, während die Tasche in der Förderrichtung 20 stromabwärts bewegt wird.

In Fig. 12 ist eine Situation gezeigt, in der eine vordere Kante der Rückseite 44 von unten an die Rollenbahn 72 stößt, um die Tasche 16 in die horizontale Beladestellung zu drehen. Der horizontale Abstand in der Längsrichtung X der Einzelrolle 170 und der Rollenbahn 172 sowie die Neigung der Rollenbahn 172 ist auf die Länge der Rückseite 44 der Tasche 16 so abgestimmt, dass die Tasche 16 in der Beladeposition mit ihrem unteren Abschnitt 56 auf der Einzelrolle 170 aufliegt und mit ihrem oberen Abschnitt 54 unter der letzten stromaufwärts gelegenen Rolle der Rollenbahn 172 anliegt. Die Einzelrolle 170 ist so weit unterhalb der Hilfslinie 120 angeordnet, dass die Rückseite 44 der Tasche 16 in der Beladeposition die Hilfslinie 120 überdeckt. Die letzte Rolle der Rollenbahn 120 ist knapp oberhalb der Hilfslinie 120 angeordnet, so dass die Rückseite 44 der Tasche in der Beladeposition die Hilfslinie 120 überdeckt.

In Fig. 13 ist eine Seitenansicht einer Abwandlung der Beladestation 14 der Fig. 12 gezeigt. Die Beladestation 14 der Fig. 13 weist die Rollenbahn 172 der Fig. 12 nicht auf. Dies bedeutet, dass die Rollenanordnung 168 allein durch die Einzelrolle 170 definiert ist. Auch wenn nur eine einzige Rolle 170 vorgesehen ist, gibt es eine Position der Tasche 16, in welcher die Rückseite 44 der Tasche 16 horizontal orientiert ist. Diese Beladeposition ist in Fig. 13 gezeigt.

Die Beladeposition bzw. der Ort, an dem die Tasche 16 in ihrer horizontalen Beladestellung ist, ist von der Dimensionierung, dem Gewicht und der Gewichtsverteilung der Ware 26 abhängig und kann sich somit an unterschiedlichen Orten relativ zur Einzelrolle 170 einstellen. Um die horizontale Ausrichtung der Rückseite 44 zu bestimmen, kann ein Sensor 174 (z.B. Lichttaster, Lichtschranke, etc.) vorgesehen sein. Sobald die horizontale Beladestellung erreicht ist, wird ein entsprechendes Signal vom Sensor 174 an einen (hier nicht dargestellte) Steuereinrichtung übermittelt, die z.B. einen Schieber 96 anweist, die geladene Ware 26 auszuschieben. Der Schieber 96 ist in Fig. 13 durch eine Strichlinie angedeutet. Zu diesem Zweck kann die Transportbewegung unterbrochen werden.

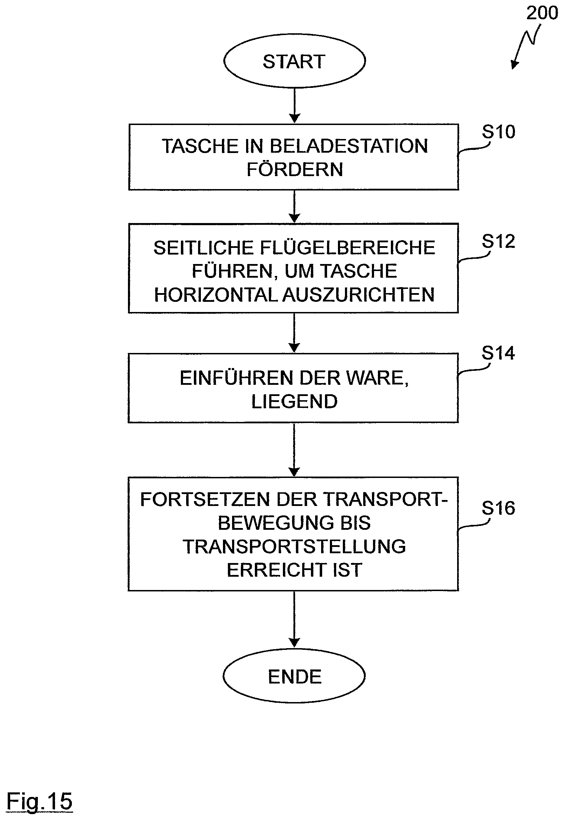

Fig. 15 zeigt ein Flussdiagramm eines Verfahrens 200 zum, vorzugsweise automatisierten, Beladen einer Hängeförder-Tasche 16, die eine Rückseite 44, eine an der Rückseite 44 schwenkbar angebrachte Aufhängeeinrichtung 40, einen Deckel 46, eine Vorderseite 48 und einen Boden 50 aufweist, die auch während eines Be- und Entladens dauerhaft miteinander verbunden sind.

In einem ersten Schritt S10 werden leere Taschen 16 in der Förderrichtung 20 stromabwärts in eine Beladestation 14, die nach Art der oben beschriebenen Beladestation 14 ausgebildet ist, gefördert. In einem Schritt S12 werden die seitlichen Flügelbereiche 66 der Rückseite 44 einer jeden Tasche 16 entlang der Auslenkrichtung 21 geführt, die unterhalb der Führungsschiene 18 des Hängeförderers 12 angeordnet ist. Die Auslenkeinrichtung 21 erstreckt sich, wie oben ausgeführt, im Wesentlichen parallel zur Förderrichtung 20, wobei der mindestens eine seitliche Flügelbereich 66 während seiner Passage der Auslenkeinrichtung 21 permanent in Eingriff mit der Auslenkeinrichtung 21 ist. Die Auslenkeinrichtung 21 ruft an ihrem stromaufwärts gelegenen Ende 90 eine Drehung der Taschen 16 aus ihren lotrechten Transportstellungen in eine im Wesentlichen horizontale Beladestellung hervor. In einem Schritt S14 werden die Ware(n) 26 in die Taschen 16 entlang der Querrichtung Z entweder horizontal seitlich oder ansteigend frontal eingeführt. Die Querrichtung Z ist quer, vorzugsweise senkrecht, zur Förderrichtung 20 orientiert. Im Falle einer horizontal seitlichen Einführung ist zumindest eine der Seitenwände 51 der Taschen 16 offen ausgebildet. Im Falle der ansteigend frontalen Einführung von unten ist zumindest der Deckel 46 offen ausgebildet. Bei der ansteigend frontalen Einführung von unten ist die Tasche oben durch die Auslenkeinrichtung 21 geführt.

In einem Schritt S16 wird die Transportbewegung fortgesetzt, bis die beladenen Taschen 16 ein stromabwärts gelegenes Ende 88 der Auslenkeinrichtung 21 passiert haben, wo die Führung des zumindest einen seitlichen Flügelbereichs 66 durch die Auslenkeinrichtung 21 endet, so dass die Taschen 16 nur noch von der Aufhängeeinrichtung 40 getragen werden. Die Taschen 16 schwingen dann in die lotrechte Transportstellung zurück.

Generell gilt, dass sowohl die Beladestationen 14 als auch die Entladestationen 130 eingerichtet sind, mit den überstehenden Flügelbereichen 66 der breiteren Rückseite 44 in Eingriff zu kommen, um die Taschen 16 aus der lotrechten Transportstellung in die horizontale Beladestellung zu führen. Die Vorderseite 48 hängt durch. Der Begriff "Rückseite" umfasst auch Elemente, Anbauten oder Ähnliches, die an der eigentlichen Rückseite 44 (zusätzlich) angebracht werden, um die überstehenden Flügelbereiche 66 zu bilden, auf denen die Tasche 16 in der Beladestation 14 oder Entladestation 130 aufliegt. Eine Tasche, deren Rückseite, Vorderseite, Deckel und Boden gleich breit sind, kann zu einer erfindungsgemäßen Tasche umgerüstet werden, indem die eigentliche Rückseite um (zusätzlich) angebrachte Flügelbereiche verbreitert ist. Die Flügelbereiche 66 müssen sich übrigens nicht kontinuierlich über die gesamte Länge der Rückseite erstrecken. Eine intermittierende Ausgestaltung der Flügelbereiche 66 (wie z.B. bei einem Kamm) ist ebenfalls als von der Erfindung umfasst anzusehen. Außerdem reicht es, nur einen einzigen seitlichen Flügelbereich 66 vorzusehen, um das Prinzip der Erfindung zu realisieren. In diesem Fall kann die Aufhängeeinrichtung beispielsweise auf der gegenüberliegenden Seite außen an der Oberkante der Rückseite 44 vorgesehen sein, um eine derartige Tasche 16 stabil in der horizontalen Beladestellung bei einseitig vorgesehener Auslenkeinrichtung 21 zu halten.

In der oben stehenden Beschreibung der Figuren hat man sich bei der Wahl der Orientierung der Koordinatensysteme generell an die in der Lagerlogistik übliche Bezeichnung gehalten, so dass die Längsrichtung mit X, Querrichtung Z und die (vertikale) Höhe mit Y bezeichnet wurden.

Des Weiteren wurden gleiche Teile und Merkmale mit gleichen Bezugszeichen versehen. Die in der Beschreibung enthaltenen Offenbarungen sind sinngemäß auf gleiche Teile und Merkmale mit denselben Bezugszeichen übertragbar. Lage- und Orientierungsangaben (z.B. "oben", "unten", "seitlich", "längs", "horizontal", "vertikal" und Ähnliches) sind auf die unmittelbar beschriebene Figur bezogen. Bei einer Änderung der Lage oder Orientierung sind diese Angabe aber sinngemäß auf die neue Lage- bzw. Orientierung zu übertragen.

### BEZUGSZEICHENLISTE

- 10: Hängeförder-Anlage
- 12: Hängeförderer
- 14: Beladestation
- 16: (Transport-)Tasche
- 18: Führungsschiene
- 20: Förderrichtung
- 21: Auslenkeinrichtung
- 22: Umlenkschiene
- 24: Zuführplattform
- 26: (Liege-)Ware
- 28: seitliche Beladung
- XYZ: Koordinatensystem
- 40: Aufhängeeinrichtung
- 42: Haken
- 43: Mitnehmer von 12
- 44: Rückseite
- 46: Deckel
- 48: Vorderseite
- 50: Boden
- 51: offene Seitenwand
- 52: seitliche Öffnung
- 54: oberer Abschnitt von 44
- 56: unterer Abschnitt von 44
- 58: Längsrichtung von 44
- 60: Rahmen(-gestell)
- 62: Längsstreben von 60
- 64: Querstreben von 60
- 66: Flügelbereich
- 68: 1. Schwenkachse
- 70: 2. Schwenkachse
- 72: Hilfslinie

- 82: einleitender Abschnitt von 22
- 84: Beladeabschnitt von 22
- 86: ausleitender Abschnitt von 22
- 88: stromabwärts gelegenes Ende von 21
- 90: stromaufwärts gelegenes Ende von 21
- 92: Schwenkelement
- 94: Schwenkachse
- 96: Schieber
- 98: Bewegung von 96
- 100: Schwenkachse von 42 in Fig. 3
- 102: Scharnier
- 104: Gewebe (flexibel)
- 106: Fläche
- 110: Zuführförderer (stetig)
- 112: Bandförderer
- 114: Drehrichtung
- 106: Abwurfrichtung
- α: Anstellwinkel von 22
- β: Anstellwinkel von 122
- 117: Seitenwände von 16
- 118: Abschwingbewegung von 16 in Fig. 7

- 130: Entladestation
- 132: Hubeinrichtung
- 134: Abführförderer (stetig)
- 135: Bandförderer
- 136: Hubhaken
- 138: vertikal bewegbar
- 140: horizontal bewegbar
- γ: Anstellwinkel von 16
- 142: Horizontale
- 144: Fallbewegung
- 146: Abtransport
- 148: Symmetrieebene (Fig. 9)
- 150: Hubstifte
- 152: Schwenkbewegung
- FH: Fallhöhe
- 160: Ausschieben
- 162: Rollenförderer
- 172: Rollenbahn
- 174: Sensor

## Patentansprüche

1. Taschen-Hängeförderanlage (10) mit:
einem Hängeförderer (12) zum Transportieren von Taschen (16) entlang einer Führungsschiene (18) stromabwärts in einer Förderrichtung (20), wobei die Taschen (16) in einer Transportstellung lotrecht unterhalb der Führungsschiene (18) hängen und wobei die Taschen (16) in einer Beladestellung im Wesentlichen horizontal ausgerichtet sind;
einer Beladestation (14), die eine Auslenkeinrichtung (21) aufweist, wobei die Auslenkeinrichtung (21) ein stromaufwärts gelegenes Ende (90) und ein stromabwärts gelegenes Ende (88) aufweist und unterhalb der Führungsschiene (22) des Hängeförderers (12) angeordnet ist, wobei die Taschen (16) während des Transports in der Förderrichtung (20) in Anlage mit der Auslenkeinrichtung (21) kommen, um die Taschen (16) zumindest anfänglich während eines fortgesetzten Transports in der Förderrichtung (20) aus der lotrechten Transportstellung in die im Wesentlichen horizontale Beladestellung zu drehen; und
einer Tasche (16), wobei die Tasche (16) aufweist:
eine Aufhängeeinrichtung (40) zum schwenkbaren Koppeln der Tasche (16) an die Führungsschiene (18) des Hängeförderers;
eine im Wesentlichen geschlossene Rückseite (44), die in der lotrechten Transportstellung einen oberen Abschnitt (54) und einen unteren Abschnitt (56) aufweist, wobei sich der untere Abschnitt (56) in einer Längsrichtung (58) der Rückseite (44) an den oberen Abschnitt (54) anschließt;
einen Deckel (46), der offen oder im Wesentlichen geschlossen ausgebildet ist;
eine im Wesentlichen geschlossene Vorderseite (48); und
einen im Wesentlichen geschlossenen Boden (50);
**dadurch gekennzeichnet, dass** die Rückseite (44) in der Querrichtung (Z) jeweils breiter als der Deckel (46), die Vorderseite (48) und der Boden (50) ausgebildet ist, so dass die Rückseite (44) zumindest einen, seitlich in Bezug auf die Vorderseite (48) überstehenden, Flügelbereich (66) aufweist, der während eines Transports der Tasche (16) durch die Beladestation (14) zum Drehen der Tasche (16) gegen die Auslenkeinrichtung anstößt und der in der Beladestellung auf der Auslenkeinrichtung (21) aufliegt.

2. Taschen-Hängeförderanlage (10) nach Anspruch 1, wobei sich jeder Flügelbereich (66) in der Längsrichtung (58) über eine gesamte Länge der Rückseite (44) erstreckt.

3. Taschen-Hängeförderanlage (10) nach einem der vorhergehenden Ansprüche:
wobei die Rückseite (44) um eine erste horizontale Schwenkachse (68) schwenkbar mit dem Deckel (46) verbunden ist, die im oberen Abschnitt (54) der Rückseite (44) angeordnet ist;
wobei die Rückseite (44) um eine zweite horizontale Schwenkachse (70) schwenkbar mit dem Boden (50) verbunden ist; und
wobei der Deckel (46) und der Boden (50) jeweils mit der Vorderseite (48) verbunden sind.

4. Taschen-Hängeförderanlage (10) nach einem der vorhergehenden Ansprüche, wobei die Rückseite (44) einen Rahmen (60-1) aufweist, der eine rechtwinklige Grundfläche umgibt und der aus Längsstreben (62) und Querstreben (64) gebildet ist.

5. Taschen-Hängeförderanlage (10) nach einem der vorhergehenden Ansprüche, wobei der Deckel (50) einen Rahmen (60-2) aufweist, der eine rechtwinklige Grundfläche umgibt und der aus Längsstreben (62) und einer oder mehreren Querstreben (64) gebildet ist, und wobei insbesondere der Boden (50) einen Rahmen (60-3) aufweist, der eine rechtwinklige Grundfläche umgibt und der aus Längsstreben (62) und Querstreben (64) gebildet ist.

6. Taschen-Hängeförderanlage (10) nach einem der vorhergehenden Ansprüche, wobei die Tasche (16) ferner mindestens eine seitliche Öffnung (52) aufweist, wobei jede seitliche Öffnung (52-1, 52-2) von der Rückseite (44), vom Deckel (46), von der Vorderseite (48) und vom Boden (50) umgeben ist.

7. Taschen-Hängeförderanlage (10) nach einem der vorhergehen Ansprüche, wobei die Auslenkeinrichtung (21) ein erstes Schwenkelement (92), das relativ zur Führungsschiene (18) in der Querrichtung (Z) versetzt angeordnet ist, und ein zweites Schwenkelement (92) aufweist, das relativ zur Führungsschiene (18) in der Querrichtung (Z) gegenüberliegend zum ersten Schwenkelement (92) versetzt angeordnet ist, so dass die Vorderseite (48) zwischen den Schwenkelementen (92) durchhängen kann, wobei insbesondere zwei Schwenkelemente (92) vorgesehen sind, die in der Querrichtung (Z) seitlich zur Führungsschiene (18) so gegeneinander versetzt sind, dass der Deckel (46), die Vorderseite (48) und der Boden (50) zwischen den Schwenkelementen (92) von der Rückseite (44) herabhängen können.

8. Taschen-Hängeförderanlage (10) nach einem der vorhergehenden Ansprüche, wobei die Auslenkeinrichtung (21) zwei Umlenkschienen (22) aufweist, die in einer Draufsicht im Wesentlichen parallel zur Förderrichtung (20) verlaufen, wobei vorzugsweise jede der Umlenkschienen (22) einen einleitenden Abschnitt (82), einen Beladeabschnitt (84) und einen ausleitenden Abschnitt (86) aufweist, wobei der Beladeabschnitt (86) die Beladestellung (Fig. 1C) der Taschen (16) definiert und im Wesentlichen horizontal ausgerichtet ist und wobei der einleitende Abschnitt (82) jeweils eines der Schwenkelemente (92) umfasst.

9. Taschen-Hängeförderanlage nach Anspruch 1, wobei die Auslenkeinrichtung (21) ausgebildet ist, während des Transports der Taschen (16) durch die Beladestation (14) hindurch permanent, vorzugsweise ausschließlich, mit einer jeweiligen Rückseite (44) der Tasche in Kontakt zu sein und die jeweilige Rückseite aus der lotrechten Transportstellung in die im Wesentlichen horizontale Beladestellung zu führen.

10. Taschen-Hängeförderanlage nach Anspruch 9, wobei die Beladestation ferner eine Zuführplattform (24) aufweist, die in einer Höhe relativ zur Auslenkeinrichtung (21) angeordnet ist, so dass Ware (26) entlang einer Querrichtung (Z) seitlich in eine Tasche (16) verschiebbar ist, wobei vorzugsweise ferner ein Schieber (96) vorgesehen ist, der angeordnet ist, Ware (26) horizontal seitlich in die Taschen (16) zu bewegen, wenn sich die Taschen in der Beladestellung befinden

11. Taschen-Hängeförderanlage nach Anspruch 9, wobei ferner ein Zuführförderer (110) vorgesehen ist, der Ware (26) automatisiert in die Taschen (16) befördert, wenn sich die Taschen (16) in der Beladestellung befinden, wobei der Zuführförderer (110) insbesondere unterhalb der Führungsschiene (18) des Hängeförderers (12) angeordnet ist, und unterhalb der Auslenkeinrichtung (21) angeordnet ist, und wobei der Zuführförderer (110) vorzugsweise zur frontalen Beladung der Taschen (16) stromaufwärts relativ zur Beladestellung angeordnet ist.

12. Taschen-Hängeförderanlage nach Anspruch 1 mit einer Entladestation (130) zum Entladen der Taschen (16), wobei die Entladestation eine Hubeinrichtung (130) und einen Abführförderer (134) aufweist, wobei die Hubeinrichtung (134) eingerichtet ist, in einer Entladestellung in Kontakt mit den Flügelbereichen (66) zu kommen, so dass zumindest jeweils die unteren Abschnitte (56) der Taschen (16) horizontal ausgerichtet oder stromabwärts abfallend ausgerichtet sind.

13. Taschen-Hängeförderanlage nach Anspruch 12, wobei der Abführförderer (134) schwenkbar (152) gelagert ist und parallel zur Förderrichtung (20) orientiert ist.

14. Tasche zum Einsatz in einer Taschen-Hängeförderanlage gemäß Anspruch 1, wobei die Tasche (16) aufweist:
eine Aufhängeeinrichtung (40) zum schwenkbaren hängenden Koppeln der Tasche (16) an einen Hängeförderer (12);
eine im Wesentlichen geschlossene Rückseite (44), die in einer lotrechten Transportstellung einen oberen Abschnitt (54) und einen unteren Abschnitt (56) aufweist, wobei sich der untere Abschnitt (56) in einer Längsrichtung (58) der Rückseite (44) an den oberen Abschnitt (54) anschließt;
einen Deckel (46), wobei der Deckel (46) offen oder im Wesentlichen geschlossen ausgebildet ist;
eine im Wesentlichen geschlossene Vorderseite (48); und
einen im Wesentlichen geschlossenen Boden (50);
wobei die Tasche (16) ferner mindestens eine seitliche Öffnung (52) aufweist, die durch eine offene Seitenwand (51) ausgebildet ist, wobei jede seitliche Öffnung (52-1, 52-2) von der Rückseite (44), vom Deckel (46), von der Vorderseite (48) und vom Boden (50) umgeben ist;
**dadurch gekennzeichnet, dass** die Rückseite (44) entlang einer Querrichtung (Z) jeweils breiter als der Deckel (46), die Vorderseite (48) und der Boden (50) ausgebildet ist, so dass die Rückseite (44) zumindest einen, seitlich in Bezug auf die Vorderseite (48) überstehenden, Flügelbereich (66) aufweist, wobei jeder der Flügelbereiche (66) während eines Transports der Tasche (16) durch eine Beladestation (14) zum Drehen der Tasche (16) gegen eine Auslenkeinrichtung (21) anstößt und in einer im Wesentlichen horizontalen Beladestellung auf der Auslenkeinrichtung (21) aufliegt; wobei die Rückseite (44) einen Rahmen (60-1) aufweist, der entlang eines äußeren Umfangs der Rückseite (44) angeordnet ist, der eine rechtwinklige Grundfläche umgibt und der aus Längsstreben (62) und Querstreben (64) gebildet ist; wobei der Deckel (46) einen weiteren Rahmen (60-2) aufweist, der eine rechtwinklige Grundfläche umgibt und der aus Längsstreben (62) und Querstreben (64) gebildet ist.

15. Verfahren zum, vorzugsweise automatisierten, Beladen einer Hängeförder-Tasche (16) mit einer im Wesentlichen geschlossenen Rückseite (44), einer an der Rückseite (44) schwenkbar angebrachten Aufhängeeinrichtung (40), einem Deckel (46), einer im Wesentlichen geschlossenen Vorderseite (48) und einem im Wesentlichen geschlossenen Boden (50), die auch während eines Be- und Entladens dauerhaft miteinander verbunden bleiben, in einer Taschen-Hängeförderanlage nach einem der Ansprüche 1 bis 8, das die folgenden Schritte aufweist:
Fördern (S10) einer leeren Tasche (16) in der Förderrichtung (20) stromabwärts in die Beladestation (14);
Führen (S12) von zumindest einem seitlichen Flügelbereich (66) der Rückseite (44) der Tasche (16) entlang der Auslenkeinrichtung (21), die unterhalb der Führungsschiene (18) des Hängeförderers (12) angeordnet ist und die sich im Wesentlichen parallel zur Förderrichtung (20) erstreckt, wobei der mindestens eine seitliche Flügelbereich (66) während der Passage der Auslenkeinrichtung (21) permanent in Anlage mit der Auslenkeinrichtung (21) kommt, welche an ihrem stromaufwärts gelegenem Ende (90) eine Drehung der Tasche (16) aus der lotrechten Transportstellung in die im Wesentlichen horizontale Beladestellung hervorruft;
horizontal seitliches Einführen (S14) einer liegenden Ware (26) in die Tasche (16) entlang der Querrichtung (Z) durch eine offene Seitenwand (51) der Tasche (16) oder frontales Einführen der Ware (26) von unten in die oben durch die Auslenkeinrichtung (21) geführte Tasche (16) durch den offenen Deckel (46) der Tasche (16), während sich die Tasche (16) in der im Wesentlichen horizontalen Beladestellung befindet;
Fortsetzen (S16) der Transportbewegung bis die beladenen Tasche (16) das stromabwärts gelegene Ende (88) der Auslenkeinrichtung (21) passiert hat, wo die Führung des zumindest einen seitlichen Flügelbereichs (66) durch die Auslenkeinrichtung (21) endet, so dass die Tasche (16) nur noch von der Aufhängeeinrichtung (40) getragen wird, wobei die Transportbewegung während des Einführens vorzugsweise kontinuierlich fortgesetzt wird.

## Claims

1. A pocket-overhead conveyor system (10) comprising:
an overhead conveyor (12) for transporting pockets (16) along a guiding rail (18) in a downstream conveying direction (20), wherein the pockets (16) are hanging perpendicularly beneath the guiding rail (18), and wherein the pockets (16) are orientated substantially horizontally in a loading position;
a loading station (14) comprising a deflecting device (21), wherein the deflecting device (21) comprises an upstream end (90) and a downstream end (88), and is arranged beneath the guiding rail (22) of the overhead conveyor (12), wherein the pockets (16) get in contact with the deflecting device (21) during the transport in the conveying direction (20) for rotating the pockets (16) at least initially during a continued transport in the conveying direction (20) from the perpendicular transport position into the substantially horizontal loading position; and
a pocket (16), wherein the pocket (16) comprises:
a suspension device (40) for pivotally coupling the pocket (16) to the guiding rail (18) of the overhead conveyor;
a substantially closed back side (44) which comprises, in the perpendicular transport position, an upper portion (54) and a lower portion (56), wherein the lower portion (56) is adjacent to the upper portion (54) in a longitudinal direction (58) of the back side (44);
a cover (46) formed open or substantially closed;
a substantially closed front side (48); and
a substantially closed base (50);
**characterized in that** the back side (44) is formed wider than the cover (46), the front side (48), and the base (50), respectively, so that the back side (44) comprises at least one wing section (66) projecting laterally relative to the front side (48), which wing section abuts, during transport of the pocket (16) through the loading station (14), against the deflecting device for rotating the pocket (16) and which lies on the deflecting device (21) in the loading position.

2. The pocket-overhead conveyor system (10) of claim 1, wherein each wing section (60) extends in the longitudinal direction (58) across an overall length of the back side (44).

3. The pocket-overhead conveyor system (10) of any one of the preceding claims:
wherein the back side (44) is connected to the cover (46) pivotally about a first horizontal pivot axis (68) which is arranged in the upper portion (54) of the back side (44);
wherein the back side (44) is connected to the base (50) pivotally about a second horizontal pivot axis (70); and
wherein the cover (46) and the base (50) are respectively connected to the front side (48).

4. The pocket-overhead conveyor system (10) of any of the preceding claims, wherein the back side (44) comprises a frame (60-1) enclosing a rectangular base area and being formed of longitudinal struts (62) and one or more transversal struts (64).

5. The pocket-overhead conveyor system (10) of any of the preceding claims, wherein the cover (50) comprises a frame (60-2) enclosing a rectangular base area und being formed of longitudinal struts (62) and one or more transversal struts (64), and wherein particularly the base (50) comprises a frame (60-3) enclosing a rectangular base area and is formed of longitudinal struts (62) and transversal struts (64).

6. The pocket-overhead conveyor system (10) of any of the preceding claims, wherein the pocket (16) further comprises at least one lateral opening (52), wherein each lateral opening (52-1, 52-2) is enclosed by the back side (44), the cover (46), the front side (48), and the base (50).

7. The pocket-overhead conveyor system (10) of any of the preceding claims, wherein the deflecting device (21) comprises a first pivot element (92) which is arranged displaced in the transversal direction (Z) relative to the guiding rail (18), and a second pivot element (92) which is arranged displaced in the transversal direction (Z) relative to the guiding rail (18) oppositely to the first pivot element (92) so that the front side (48) can sag between the pivot elements (92), wherein in particular two pivot elements (92) are provided which are displaced to each other in the transversal direction (Z) laterally to the guiding rail (18) so that the cover (46), the front side (48), and the base (50) can hang down from the back side (44) between the pivot elements (92).

8. The pocket-overhead conveyor system (10) of any of the preceding claims, wherein the deflecting device (21) comprises two redirecting rails (22) extending in a top view substantially parallel to the conveying direction (20), wherein preferably each of the redirecting rails (22) comprises an infeed portion (82), a loading portion (84), and an outfeed portion (86), wherein the loading portion (86) defines the loading position (Fig. 1C) of the pockets (16) and is orientated substantially horizontally, and wherein the infeed portion (82) comprises respectively one of the pivot elements (92).

9. The pocket-overhead conveyor system of claim 1, wherein the deflecting device (21) is formed to be in contact, during the transport of the pockets (16) through the loading station (14), permanently, preferably exclusively, with a respective back side (44) of the pocket, and guide the respective back side from the perpendicular transport position into the substantially horizontal loading position.

10. The pocket-overhead conveyor system of claim 9, wherein the loading station further comprises a feeding platform (24) which is arranged in a height relative to the deflecting device (21) such that goods (26) are pushable along a transversal direction (Z) laterally into a pocket (16), wherein further a pusher (96) is provided which is arranged for moving goods (26) horizontally and laterally into the pockets (16) when the pockets are in the loading position.

11. The pocket-overhead conveyor system of claim 9, wherein further a feeding conveyor (110) is provided which conveys the goods (26) automatically into the pockets (16) when the pockets (16) are in the loading position, wherein the feeding conveyor (110) is arranged in particular beneath the guiding rail (18) of the overhead conveyor (12), and is arranged beneath the deflecting device (21), and wherein the feeding conveyor (110) is arranged for loading, preferably frontally, the pockets (16) upstream relative to the loading position.

12. The pocket-overhead conveyor system of claim 1 including an unloading station (130) for unloading the pockets (16), wherein the unloading station comprises a lifting device (130) and a discharging conveyor (134), wherein the lifting device (134) is configured to get into contact with the wing sections (66) in an unloading position so that at least the lower portions (56) of the pockets (16) are respectively orientated horizontally or are orientated downwards in a downstream direction.

13. The pocket-overhead conveyor system of claim 12, wherein the discharging conveyor (134) is supported pivotally (152), and orientated parallel to the conveying direction (20).

14. A pocket for use in a pocket-overhead conveyor system of claim 1,
wherein the pocket (16) comprises:
a suspension device (40) for coupling the pocket (16) to an overhead conveyor (12) in a pivotally hanging manner;
a substantially closed back side (44) comprising, in a perpendicular transport position, an upper portion (54) and a lower portion (56), wherein in a longitudinal direction (58) the lower portion (56) of the back side (44) is adjacent to the upper portion (54);
a cover (46), wherein the cover (46) is formed open or substantially closed;
a substantially closed front side (48); and
a substantially closed base (50);
wherein the pocket (16) further comprises at least one lateral opening (52) formed by an open side wall (51), wherein each lateral opening (52-1, 52-2) is enclosed by the back side (44), the cover (46), the front side (48), and the bottom (50);
**characterized in that** the back side (44) is formed along a transversal direction (Z) wider than the cover (46), the front side (48), and the base (50), respectively, so that the back side (44) comprises at least one wing section (66) projecting laterally relative to the front side (48), wherein each of the wing sections (66) abuts, during a transport of the pocket (16) through a loading station (14), against a deflecting device (21) for rotating the pocket (16) and lies on the deflecting device (21) in a substantially horizontal loading position; wherein the back side (44) comprises a frame (60-1) arranged along an outer circumference of the back side (44) which encloses a rectangular base area and is formed of longitudinal struts (62) and transversal struts (64); wherein the cover (46) comprises an additional frame (60-2) which encloses a rectangular base area and is formed of longitudinal struts (62) and transversal struts (64).

15. A method for, preferably automatically, loading an overhead-conveyor pocket (16) which has a substantially closed back side (44), a suspension device (40) attached pivotally to the back side (44), a cover (46), a substantially closed front side (48), and a substantially closed base (50), which stay permanently connected to each other even during unloading and loading, in a pocket-overhead conveyor system of any of claims 1 to 8, comprising the following steps of:
conveying (S10) an empty pocket (16) in the conveying direction (20) downstream into the loading station (14);
guiding (S12) of at least one lateral wing section (66) of the back side (44) of the pocket (16) along the deflecting device (21) arranged beneath the guiding rail (18) of the overhead conveyor (12) and extending substantially parallel to the conveying direction (20), wherein the at least one lateral wing section (66) is permanently in contact with the deflecting device (21) while passing the deflecting device (21) which causes at an upstream end (90) thereof a rotation of the pocket (16) from the perpendicular transport position into the substantially horizontal loading position;
introducing (S14) horizontally and laterally a lying good (26) into the pocket (16) along the transversal direction (Z) through an open side wall (51) of the pocket (16) or frontally introducing the good (26) from below into the pocket (16), which is guided at the top by the deflecting device (21), through the open cover (46) of the pocket (16) while the pocket (16) is in the substantially horizontal loading position;
continuing (S16) the transport movement until the loaded pocket (16) passes the downstream end (88) of the deflecting device (21) where the guidance of the at least one lateral wing section (66) by the deflecting device (21) ends so that the pocket (16) is only carried by the suspension device (40), wherein the transport movement is preferably continued continuously during the introducing step.

## Revendications

1. Installation de convoyage suspendu pour sacs (10), dotée :
d'un convoyeur suspendu (12) pour le transport de sacs (16) le long d'un rail de guidage (18) vers l'aval dans une direction de convoyage (20), dans laquelle les sacs (16) sont, dans une position de transport, suspendus à la verticale en-dessous du rail de guidage (18) et dans laquelle les sacs (16) sont, dans une position de chargement, orientés essentiellement horizontalement ;
d'un poste de chargement (14), lequel comporte un dispositif de déviation (21), dans laquelle le dispositif de déviation (21) comporte une extrémité (90) disposée vers l'amont et une extrémité (88) disposée vers l'aval et est agencé en-dessous du rail de guidage (22) du convoyeur suspendu (12), dans laquelle les sacs (16) viennent en appui contre le dispositif de déviation (21) pendant le transport dans la direction de convoyage (20), afin de faire tourner au moins initialement les sacs (16) depuis la position de transport verticale vers la position de chargement essentiellement horizontale pendant un transport continu dans la direction de convoyage (20) ; et
d'un sac (16), dans laquelle le sac (16) comporte :
un dispositif de suspension (40) pour raccorder de manière pivotante le sac (16) au rail de guidage (18) du convoyeur suspendu ;
une face arrière essentiellement fermée (44), laquelle comporte dans la position de transport verticale une section supérieure (54) et une section inférieure (56), dans laquelle la section inférieure (56) se rattache à la section supérieure (54) dans une direction longitudinale (58) de la face arrière (44) ;
une couverture (46), laquelle est réalisée comme ouverte ou essentiellement fermée ;
une face avant essentiellement fermée (48) ; et
un fond essentiellement fermé (50) ;
**caractérisée en ce que** la face arrière (44) est réalisée comme respectivement plus large que la couverture (46), la face avant (48) et le fond (50) dans la direction transversale (Z), de sorte que la face arrière (44) comporte au moins une zone d'aile (66) en saillie latérale par rapport à la face avant (48), butant contre le dispositif de déviation pendant un transport du sac (16) par le poste de chargement (14) pour la rotation du sac (16) et s'appuyant sur le dispositif de déviation (21) dans la position de chargement.

2. Installation de convoyage suspendu pour sacs (10) d'après la revendication 1, dans laquelle chaque zone d'aile (66) s'étend dans la direction longitudinale (58) au-dessus d'une longueur commune de la face arrière (44).

3. Installation de convoyage suspendu pour sacs (10) d'après l'une des revendications précédentes :
dans laquelle la face arrière (44) est raccordée à la couverture (46) de manière pivotante autour d'un premier axe de pivot horizontal (68), lequel est agencé dans la section supérieure (54) de la face arrière (44) ;
dans laquelle la face arrière (44) est raccordée au fond (50) de manière pivotante autour d'un deuxième axe de pivot horizontal (70) ; et
dans laquelle la couverture (46) et le fond (50) sont raccordés à la face avant (48).

4. Installation de convoyage suspendu pour sacs (10) d'après l'une des revendications précédentes, dans laquelle la face arrière (44) comporte un cadre (60-1), lequel entoure une surface de base rectangulaire et est formé d'entretoises longitudinales (62) et d'entretoises transversales (64).

5. Installation de convoyage suspendu pour sacs (10) d'après l'une des revendications précédentes, dans laquelle la couverture (50) comporte un cadre (60-2), lequel entoure une surface de base rectangulaire et est formé d'entretoises longitudinales (62) et d'une ou plusieurs entretoises transversales (64), et dans laquelle en particulier le fond (50) comporte un cadre (60-3), lequel entoure une surface de base rectangulaire et est formé d'entretoises longitudinales (62) et d'entretoises transversales (64).

6. Installation de convoyage suspendu pour sacs (10) d'après l'une des revendications précédentes, dans laquelle le sac (16) comporte en outre une ouverture latérale (52), dans laquelle chaque ouverture latérale (52-1, 52-2) est entourée par la face arrière (44), par la couverture (46), par la face avant (48) et par le fond (50).

7. Installation de convoyage suspendu pour sacs (10) d'après l'une des revendications précédentes, dans laquelle le dispositif de déviation (21) comporte un premier élément de pivot (92), lequel est agencé en décalage dans la direction transversale (Z) relativement au rail de guidage (18), et un deuxième élément de pivot (92), lequel est agencé en décalage dans la direction transversale (Z) relativement au rail de guidage (18) à l'opposé du premier élément de pivot (92), de sorte que la face avant (48) peut fléchir entre les éléments de pivot (92), dans laquelle en particulier deux éléments de pivots (92) sont prévus, lesquels sont en décalage latéral par rapport au rail de guidage (18) dans la direction transversale (Z) de telle sorte que la couverture (46), la face avant (48) et le fond (50) peuvent pendre depuis la face arrière (44) entre les éléments de pivot (92).

8. Installation de convoyage suspendu pour sacs (10) d'après l'une des revendications précédentes, dans laquelle le dispositif de déviation (21) comporte deux rails de déviation (22), lesquels sont essentiellement parallèles à la direction de convoyage (20) vu de dessus, dans laquelle de préférence chacun des rails de déviation (22) comporte une section d'introduction (82), une section de chargement (84) et une section de sortie (86), dans laquelle la section de chargement (86) définit la position de chargement (fig. 1C) des sacs (16) et est orientée essentiellement horizontalement et dans laquelle la section d'introduction (82) comprend respectivement un des éléments de pivot (92).

9. Installation de convoyage suspendu pour sacs d'après la revendication 1, dans laquelle le dispositif de déviation (21) est réalisé pour être en permanence, de préférence exclusivement, en contact avec une face arrière (44) respective du sac et pour guider la face arrière respective depuis la position de transport verticale vers la position de chargement essentiellement horizontale pendant le transport des sacs (16) par le poste de chargement (14).

10. Installation de convoyage suspendu pour sacs d'après la revendication 9, dans laquelle le poste de chargement comporte en outre un plateau d'alimentation (24), lequel est agencé en hauteur par rapport au dispositif de déviation (21), de sorte que de la marchandise (26) peut glisser latéralement dans un sac (16) le long d'une direction transversale (Z), dans laquelle de préférence une glissière (96) est en outre prévue, laquelle est agencée pour déplacer la marchandise (26) dans les sacs (16) latéralement à l'horizontale, lorsque les sacs se trouvent dans la position de chargement.

11. Installation de convoyage suspendu pour sacs d'après la revendication 9, dans laquelle en outre un convoyeur d'alimentation (110) est prévu, lequel remplit automatiquement les sacs (16) de marchandise (26), lorsque les sacs (16) se trouvent dans la position de chargement, dans laquelle le convoyeur d'alimentation (110) est en particulier agencé en-dessous du rail de guidage (18) du convoyeur suspendu (12), et est agencé en-dessous du dispositif de déviation (21), et dans laquelle le convoyeur d'alimentation (110) est agencé de préférence pour le chargement frontal des sacs (16) en amont par rapport à la position de chargement.

12. Installation de convoyage suspendu pour sacs d'après la revendication 1 dotée d'un poste de déchargement (130) pour décharger les sacs (16), dans laquelle le poste de déchargement comporte un dispositif de levage (130) et un convoyeur d'évacuation (134), dans laquelle le dispositif de levage (134) est disposé pour entrer en contact avec les zones d'ailes (66) dans une position de déchargement, de telle sorte qu'au moins les sections inférieures (56) des sacs (16) sont respectivement orientées horizontalement ou orientées en inclinaison vers l'aval.

13. Installation de convoyage suspendu pour sacs d'après la revendication 12, dans laquelle le convoyeur d'évacuation (134) est arrangé de manière pivotante (152) et est dirigé parallèlement à la direction de convoyage (20).

14. Sac destiné à l'utilisation dans une installation de convoyage suspendu pour sacs d'après la revendication 1,
dans lequel le sac (16) comporte :
un dispositif de suspension (40) pour suspendre de manière pivotante le sac (16) au convoyeur suspendu (12) ;
une face arrière essentiellement fermée (44), laquelle comporte dans une position de transport verticale une section supérieure (54) et une section inférieure (56), dans laquelle la section inférieure (56) se rattache à la section supérieure (54) dans une direction longitudinale (58) de la face arrière (44) ;
une couverture (46), dans lequel la couverture (46) est réalisée comme ouverte ou essentiellement fermée ;
une face avant essentiellement fermée (48) ; et
un fond essentiellement fermé (50) ;
dans lequel le sac (16) comporte en outre une ouverture latérale (52), laquelle est réalisée par une paroi latérale ouverte (51), dans lequel chaque ouverture latérale (52-1, 52-2) est entourée par la face arrière (44), par la couverture (46), par la face avant (48) et par le fond (50) ;
**caractérisé en ce que** la face arrière (44) est réalisée comme respectivement plus large que la couverture (46), la face avant (48) et le fond (50) le long d'une direction transversale (Z), de sorte que la face arrière (44) comporte au moins une zone d'aile (66) en saillie latérale par rapport à la face avant (48), dans lequel pendant un transport du sac (16) par le poste de chargement (14) chacune des zones d'aile (66) bute contre un dispositif de déviation (21) pour la rotation du sac (16) et s'appuie sur le dispositif de déviation (21) dans la position de chargement ; dans lequel la face arrière (44) comporte un cadre (60-1), lequel est agencé le long d'un pourtour extérieur de la face arrière (44), lequel entoure une surface de base rectangulaire et est formé d'entretoises longitudinales (62) et d'entretoises transversales (64) ; dans laquelle la couverture (46) comporte un cadre supplémentaire (60-2), lequel entoure une surface de base rectangulaire et est formé d'entretoises longitudinales (62) et d'entretoises transversales (64).

15. Procédé de chargement, de préférence automatisé, d'un sac de convoyeur suspendu (16) doté d'une face arrière (44) essentiellement fermée, d'un dispositif de suspension (40) arrangé de manière pivotante sur la face arrière (44), d'une couverture (46), d'une face avant essentiellement fermée (48) et d'un fond essentiellement fermé (50), lesquels restent raccordés durablement l'un à l'autre même pendant un chargement et un déchargement, dans une installation de convoyage suspendu pour sacs d'après l'une des revendications 1 à 8, comportant les étapes suivantes :
convoyage (S10) d'un sac vide (16) dans le dispositif convoyeur (20) en aval vers le poste de chargement (14) ;
guidage (S12) d'au moins une zone d'aile latérale (66) de la face arrière (44) du sac (16) le long d'un dispositif de déviation (21), lequel est agencé en-dessous du rail de guidage (18) du convoyeur suspendu (12) et s'étend de manière essentiellement parallèle à la direction de convoyage (20), dans lequel l'au moins une zone d'aile (66) latérale vient de manière permanente en appui contre le dispositif de déviation (21) pendant la traversée du dispositif de déviation (21), lequel effectue, à son extrémité (90) disposée vers l'amont, une rotation du sac (16) depuis la position de transport verticale vers la position de chargement essentiellement horizontale ;
introduction (S14) latérale à l'horizontale d'une marchandise allongée (26) dans le sac (16) le long d'une direction transversale (Z) à travers une paroi latérale ouverte (51) du sac (16) ou introduction frontale de la marchandise (26) de bas en haut dans le sac (16) guidé par le dispositif de déviation (21) à travers la couverture ouverte (46) du sac (16), pendant que le sac (16) se trouve dans la position de chargement essentiellement horizontale ;
poursuite (S16) du mouvement de transport jusqu'à ce que le sac ait dépassé (16) l'extrémité (88) disposée vers l'aval du dispositif de déviation (21), où le guidage de l'au moins une zone d'aile latérale (66) par le dispositif de déviation (21) se termine, de sorte que le sac (16) n'est plus porté que par le dispositif de suspension (40), dans lequel le mouvement de transport est poursuivi de manière de préférence continue pendant l'introduction.
